# EUROPEAN PATENT APPLICATION

(11) **EP 4 277 227 A1**
(43) Date of publication of application: **15.11.2023**
(21) Application number: 23173041.7
(22) Date of filing: 12.05.2023
(51) Int. Cl.: H04L 45/02, H04L 12/46, H04L 45/16, H04L 45/00

(54) **MULTICAST COMMUNICATION METHOD AND RELATED APPARATUS**

(30) Priority: 13.05.2022 CN 202210524660; 16.08.2022 CN 202210983146
(71) Applicant: Huawei Technologies Co., Ltd., Shenzhen, Guangdong 518129 (CN)
(72) Inventor: PANG, Donglei, Shenzhen, 518129 (CN); SHENG, Cheng, Shenzhen, 518129 (CN); WANG, Haibo, Shenzhen, 518129 (CN); DUAN, Fanghong, Shenzhen, 518129 (CN); YAN, Gang, Shenzhen, 518129 (CN); GENG, Xuesong, Shenzhen, 518129 (CN)
(74) Representative: Gill Jennings & Every LLP

(57) **Abstract**

A multicast communication method is applied to a software-defined wide area network SD-WAN. In the multicast communication method, a bit index explicit replication (Bit Index Explicit Replication, BIER) capability is deployed on a site device in the SD-WAN, a site device through which a multicast packet needs to pass is indicated by a bit index explicit replication IPv6 encapsulation (Bit Index Explicit Replication IPv6 encapsulation, BIERv6) header in the multicast packet, and a multicast distribution tree does not need to be constructed. In addition, the multicast packet is forwarded through an SD-WAN tunnel between site devices, and an intermediate node does not need to sense a multicast service. In this way, a network device has a small quantity of multicast entries and the multicast entries are converged quickly, ensuring normal running of the multicast service.

## Description

### TECHNICAL FIELD

This application relates to internet technologies, and in particular, to a multicast communication method and a related apparatus.

### BACKGROUND

A software-defined wide area network (Software-Defined Wide Area Network, SD-WAN) is a network formed by applying a software-defined network (Software-Defined Network, SDN) technology to a wide area network scenario. Specifically, a point-of-presence (Point-of-Presence, POP) is added to bearer networks such as a carrier network and a private line network, and links between POPs and across the bearer networks are abstracted as logical links. In this way, the SD-WAN may be constructed by using the POP and the logical link between the POPs.

Generally, the SD-WAN includes a plurality of customer premise equipments (Customer Premise Equipments, CPEs). The CPE is an edge device of a user network, is configured to carry a service flow of a user, and accesses a network through the POP

Currently, a manner of implementing a multicast service in the SD-WAN is to deploy a protocol independent multicast (Protocol Independent Multicast, PIM) protocol on each CPE, and establish a PIM multicast distribution tree for each multicast flow on the network through the CPE With large-scale deployment of the multicast service, a quantity of to-be-maintained multicast distribution trees increases sharply, and each node device in the multicast distribution tree needs to store a large quantity of multicast stream states, that is, there are a large quantity of multicast entries in the node device. Consequently, the multicast entries in the node device converge slowly when the network changes, and normal running of the multicast service is affected.

### SUMMARY

This application provides a multicast communication method and a related apparatus, to implement a small quantity of multicast entries of a network device and quick convergence of the multicast entries, and therefore ensure normal running of a multicast service.

A first aspect of this application provides a multicast communication method, where the multicast communication method is applied to an SD-WAN. The multicast communication method includes: a first site device in the SD-WAN receives a first packet, where the first packet includes a first bit index explicit replication IPv6 encapsulation (Bit Index Explicit Replication IPv6 encapsulation, BIERv6) header and multicast data, and the first BIERv6 header indicates a set of destination nodes of the multicast data.

The first site device generates a second packet based on the first packet, where the second packet includes a first SD-WAN tunnel encapsulation header, a second BIERv6 header, and the multicast data. A destination address of the first SD-WAN tunnel encapsulation header is an IP address of a second site device, the IP address of the second site device is an egress address of the first SD-WAN tunnel between the first site device and the second site device. The first SD-WAN tunnel encapsulation header indicates another network device between the first site device and the second site device to forward the second packet to the second site device. In addition, the second BIERv6 header indicates the set of destination nodes of the multicast data. The set of destination nodes indicated by the first BIERv6 header and the second BIERv6 header may be the same.

After generating the second packet, the first site device sends the second packet to the second site device through the first SD-WAN tunnel.

In the solution, a bit index explicit replication (Bit Index Explicit Replication, BIER) capability is deployed on a site device in the SD-WAN, a site device through which the multicast packet needs to pass is indicated through a BIER header in the multicast packet, and a multicast distribution tree does not need to be constructed. In addition, multicast packets are forwarded through SD-WAN tunnels between site devices, and an intermediate node does not need to sense a multicast service. In this way, a network device has a small quantity of multicast entries and the multicast entries are converged quickly, ensuring normal running of the multicast service.

In a possible implementation, the first BIERv6 header is the same as the second BIERv6 header. In other words, the first site device does not change the first BIERv6 header when generating the second packet. A destination address of the first BIERv6 header is an IPv6 address of a target site device, and the target site device belongs to the set of destination nodes of the multicast data indicated by the first BIERv6 header. The first site device determines, based on the IPv6 address of the target site device, to send the second packet to the target site device through the first SD-WAN tunnel.

In other words, when the first site device does not change a BIERv6 header in a packet, the first site device determines a forwarding path of the packet based on a destination address of the BIERv6 header in the packet, to be specific, determines to send the packet to the target site device through the SD-WAN tunnel.

In the solution, when a site device does not have a BIER capability, the site device may determine, based on the destination address of the BIERv6 header, an SD-WAN tunnel for forwarding a multicast packet, so that the site device that does not have the BIER capability does not need to sense the multicast service. This reduces deployment complexity of the multicast service.

In a possible implementation, the first site device queries a forwarding table based on the IPv6 address of the target site device, and determines that a next-hop outbound interface points to the first SD-WAN tunnel. The forwarding table queried by the first site device may be established after the first site device establishes the first SD-WAN tunnel to the second site device, and the forwarding table records a mapping relationship between the destination address and the next-hop outbound interface.

In a possible implementation, a destination address of the first BIERv6 header is an IPv6 address of the first site device, and a destination address of the second BIERv6 header is the IPv6 address of the target site device. In other words, the first site device has the BIER capability, and the first site device modifies a first BIERv6 header in a first packet in a process of forwarding the multicast data, to indicate that a subsequent network device may forward the second packet to the target site device based on the second BIERv6 header.

In a possible implementation, the method further includes: The first site device determines the IPv6 address of the target site device and a next-hop site based on the bit string in the first BIERv6 header and a BIER forwarding table, where the next-hop site is a first site, and the target site device is located at the first site. The first site device may generate the second BIERv6 header based on the IPv6 address of the target site device. Then, the first site device determines, based on that the next-hop site is the first site, to send the second packet to the second site device through the first SD-WAN tunnel.

The first site device may record a mapping relationship between the next-hop site and the SD-WAN tunnel. The mapping relationship may be established after the first site device establishes the first SD-WAN tunnel to the second site device. Specifically, the mapping relationship records a mapping relationship between the first site and the first SD-WAN tunnel, and the first site device may determine, based on the mapping relationship, that when the next-hop site is the first site, the next-hop outbound interface points to the first SD-WAN tunnel.

In the solution, in a case that the site device has the BIER capability, the site device determines the next-hop site based on the BIER forwarding table, and then determines, based on the mapping relationship between the next-hop site and the SD-WAN tunnel, the SD-WAN tunnel for forwarding a multicast packet. In this way, the SD-WAN tunnel and BIER multicast are coupled, ensuring that an intermediate node does not need to sense the multicast service and reducing deployment complexity of the multicast service.

In a possible implementation, the IPv6 address of the target site device identifies a site at which the target site device is located, and the site at which the target site device is located includes a plurality of site devices. In this case, in a process in which the first site device determines, based on the IPv6 address of the target site device and the mapping relationship, the SD-WAN tunnel for forwarding the second packet, one or more SD-WAN tunnels connected to different site devices in the target site may be determined, so that one of the SD-WAN tunnels may be selected based on a preset policy to forward a packet.

In the solution, a site identifier of a site at which the site device is located is used as a destination address in a BIERv6 header, so that it may be ensured that a multicast packet passes through any site device in the site. This facilitates load balancing and active/standby switchover between the site devices in the site, and improves network running flexibility.

In a possible implementation, an IPv6 address of the target site device is a segment identifier (segment identifier, SID) of an End.BIER type. The SID of the target site device is a new type of SID defined by a BIERv6 network, and is essentially a segment routing IPv6 (Segment Routing IPv6, SRv6) SID, also referred to as an End.BIER address, and may be used as the destination address of the IPv6 header to indicate the network device to process the IPv6 header or forward the IPv6 packet.

In a possible implementation, before the first site device receives the first packet, the method further includes: The first site device sends first BIER information to the target site device, where the first BIER information includes at least one of the following information: the IPv6 address of the first site device, a BIER bit forwarding router identity (Bit Forwarding Router Identity, BFR-ID) of the first site device, and a BIER bit forwarding router-prefix (BFR-Prefix) of the first site device; and
the first site device receives second BIER information advertised by the target site device, where the second BIER information includes one or more of the following information: the IPv6 address of the target site device, a BFR-ID of the target site device, and a BFR-prefix of the target site device.

In the solution, the first site device sends BIER information to another site device and receives BIER information advertised by the another site device, so that each site device may generate a BIER forwarding table used to guide BIER packet forwarding, thereby completing multicast forwarding in the SD-WAN.

In a possible implementation, the first BIER information or the second BIER information is carried in a border gateway protocol (Border Gateway Protocol, BGP) packet.

In a possible implementation, the BGP packet includes a BGP shortest path first (shortest path first, SPF) address family packet, a BGP link state (link state, LS) address family packet, or a BGP SD-WAN address family packet.

In a possible implementation, the first BIER information or the second BIER information is carried in a prefix network layer reachability information (Prefix Network Layer Reachability Information, Prefix NLRI) field in the BGP SPF address family packet or the BGP LS address family packet. During actual application, another TLV in the BGP SPF address family packet or the BGP LS address family packet may alternatively be extended to carry the BIER information.

In a possible implementation, the first BIER information or the second BIER information may also be carried in an extended SD-WAN NLRI attribute field in the BGP SD-WAN address family packet.

In the solution, a BGP packet is extended to carry the BIER information, so that site devices in an SD-WAN may advertise the BIER information to each other, thereby ensuring implementation of BIER multicast forwarding, and reducing changes to the conventional technology as much as possible.

In a possible implementation, the method further includes: The first site device generates a third packet based on the first packet, where the third packet includes a second SD-WAN tunnel encapsulation header, a third BIERv6 header, and the multicast data, a destination address of the second SD-WAN tunnel encapsulation header is an IP address of a third site device, the IP address of the third site device is an egress address of a second SD-WAN tunnel between the first site device and the third site device, and the third BIERv6 header indicates the set of destination nodes of the multicast data; and the first site device sends the third packet to the third site device through the second SD-WAN tunnel.

In the solution, after receiving the first packet, the first site device may determine a multicast forwarding path of the multicast data based on an indication of the first BIERv6 header in the first packet, to replicate the multicast data and forward the multicast data to a corresponding site device. This ensures normal running of the multicast service.

In a possible implementation, the first site device is a customer edge equipment CPE or a point-of-presence POP site device.

A second aspect of this application provides a multicast communication method, where the method is applied to an SD-WAN. The method specifically includes: A second site device receives, through a first SD-WAN tunnel, a first packet sent by a first site device, where the first packet includes a first SD-WAN tunnel encapsulation header, a first BIERv6 header, and multicast data, a destination address of the first SD-WAN tunnel encapsulation header is an IP address of the second site device, the IP address of the second site device is an egress address of the first SD-WAN tunnel between the first site device and the second site device, and the second BIERv6 header indicates the set of destination nodes of the multicast data. The second site device generates a second packet based on the first packet, where the second packet includes the multicast data; and the second site device forwards the second packet.

In the solution, a BIER capability is deployed on a site device in the SD-WAN, a site device through which the multicast packet needs to pass is indicated through a BIER header in the multicast packet, and a multicast distribution tree does not need to be constructed. In addition, the site device forwards and receives multicast data through an SD-WAN tunnel, and an intermediate node does not need to sense a multicast service. In this way, a network device has a small quantity of multicast entries and the multicast entries are converged quickly, ensuring normal running of the multicast service.

In a possible implementation, the second packet includes a second SD-WAN tunnel encapsulation header, a second BIERv6 header, and the multicast data, a destination address of the second SD-WAN tunnel encapsulation header is an IP address of the third site device, the IP address of the third site device is an egress address of a second SD-WAN tunnel between the second site device and the third site device, and the second BIERv6 header indicates the set of destination nodes of the multicast data. The second site device forwards the second packet, including: The second site device sends the second packet to the third site device through the second SD-WAN tunnel.

In other words, after receiving a multicast packet through an SD-WAN tunnel, the second site device sends, based on that the second site device is not a multicast termination site of the multicast packet, a multicast packet carrying a BIERv6 header to a next-hop site device through the SD-WAN tunnel.

In a possible implementation, the first BIERv6 header is the same as the second BIERv6 header. In other words, the second site device does not change the first BIERv6 header when generating the second packet. A destination address of the first BIERv6 header is an IPv6 address of a target site device, and the target site device belongs to the set of destination nodes of the multicast data indicated by the first BIERv6 header. The second site device determines, based on the IPv6 address of the target site device, to send the second packet to the target site device through the second SD-WAN tunnel.

In other words, when the second site device does not change a BIERv6 header in a packet, the second site device determines a forwarding path of the packet based on a destination address of the BIERv6 header in the packet, that is, determines to send the packet to the target site device through the SD-WAN tunnel.

In the solution, when a site device does not have a BIER capability, the site device may determine, based on the destination address of the BIERv6 header, an SD-WAN tunnel for forwarding a multicast packet, so that the site device that does not have the BIER capability does not need to sense the multicast service. This reduces deployment complexity of the multicast service.

In a possible implementation, the second site device queries a forwarding table based on the IPv6 address of the target site device, and determines that a next-hop outbound interface points to the second SD-WAN tunnel.

In a possible implementation, a destination address of the first BIERv6 header is an IPv6 address of the second site device, and a destination address of the second BIERv6 header is an IPv6 address of a target site device. In other words, the second site device has a BIER capability, and the second site device modifies a first BIERv6 header in a first packet in a process of forwarding multicast data, to indicate that a subsequent network device may forward a second packet to the target site device based on the second BIERv6 header.

In a possible implementation, the method further includes: The second site device determines the IPv6 address of the target site device and a next-hop site based on the bit string in the first BIERv6 header and a BIER forwarding table, where the next-hop site is a first site, and the target site device is located at the first site. The second site device may generate the second BIERv6 header based on the IPv6 address of the target site device. Then, the second site device determines, based on that the next-hop site is the first site, to send the second packet to the third site device through the second SD-WAN tunnel.

The second site device may record a mapping relationship between the next-hop site and the SD-WAN tunnel. The mapping relationship records a mapping relationship between the first site and the second SD-WAN tunnel, and the second site device may determine, based on the mapping relationship, that when the next-hop site is the first site, the next-hop outbound interface points to the second SD-WAN tunnel.

In a possible implementation, the IPv6 address of the target site device identifies a site at which the target site device is located, and the site at which the target site device is located includes a plurality of site devices.

In a possible implementation, the IPv6 address of the target site device is a segment identifier of an End.BIER type.

A third aspect of this application provides a multicast communication method, where the method is applied to an SD-WAN. The method specifically includes: A first site device sends a first BGP packet to a second site device, where the first BGP packet carries first BIER information, and the first BIER information includes a BIER bit forwarding router identity BFR-ID of the first site device; the first site device receives a second BGP packet advertised by the second site device, where the second BGP packet carries second BIER information, and the second BIER information includes a BFR-ID of the second site device; and the first site device generates a first BIER forwarding entry based on the second BGP packet, where the first BIER forwarding entry is used to record a mapping relationship between a BIER forwarding destination device and a next-hop site, the destination device is represented through the BFR-ID of the second site device, and the next-hop site is obtained through calculation by using the second site device as a destination address and based on a topology of the SD-WAN. For a site device in the SD-WAN, each site device advertises, to another site device, SD-WAN tunnel information established between the site device and the another site device. Therefore, after the first site device receives the SD-WAN tunnel information advertised by each another site device, the first site device may obtain a tunnel connection relationship between the site devices in the SD-WAN, to be specific, obtain the topology of the entire SD-WAN. In this way, when using the second site device as a destination address, the first site device may obtain, a next-hop site destined for the second site device through calculation based on the topology of the SD-WAN.

In a possible implementation, the method further includes: The second site device generates a second BIER forwarding entry based on the first BGP packet, where the second BIER forwarding entry records a mapping relationship between the BFR-ID of the first site device and a next-hop site, and the BFR-ID in the second BIER forwarding entry indicates a BIER forwarding destination device. A manner in which the second site device generates the second BIER forwarding entry is similar to a manner in which the first site device generates the first BIER forwarding entry

In a possible implementation, the method further includes: The first site device determines, based on a topology of the SD-WAN, the next-hop site destined for the second site device. The topology of the SD-WAN is used to describe a connection relationship of the SD-WAN tunnel established between site devices in the SD-WAN. The first site device may obtain, through calculation in the topology of the SD-WAN through a shortest path algorithm, the next-hop site destined for the second site device.

In a possible implementation, the method further includes: The first site device receives the first SD-WAN tunnel information advertised by a third site device, where the first SD-WAN tunnel information includes an IP address of the third site device and a site to which the third site device belongs; and the first site device establishes the first SD-WAN tunnel between the first site device and the third site device based on the first SD-WAN tunnel information, and stores a first mapping relationship between a next-hop site and the first SD-WAN tunnel, where the next-hop site is the site to which the third site device belongs. That is, when the first site device establishes the first SD-WAN tunnel with the third site device, and when the next-hop site of the first site device is the third site device, an outbound interface of the first site device may be the first SD-WAN tunnel that points between the first site device and the third site device. To be specific, a packet may be forwarded to a corresponding next-hop site through the first SD-WAN tunnel.

In a possible implementation, the method further includes: The third site device receives second SD-WAN tunnel information advertised by the second site device, where the second SD-WAN tunnel information includes an IP address of the second site device and information about a site to which the second site device belongs; and the third site device establishes the second SD-WAN tunnel between the third site device and the second site device based on the second SD-WAN tunnel information, and stores a second mapping relationship between a next-hop site and the second SD-WAN tunnel, where the next-hop site in the second mapping relationship is the site to which the second site device belongs.

In other words, the second SD-WAN tunnel is further established between the third site device and the second site device. The third site device may establish the second mapping relationship between the next-hop site and the second SD-WAN tunnel, so that when the next-hop site of the packet is the second site device, the packet is sent through the second SD-WAN tunnel.

In a possible implementation, the method further includes: The first site device receives a first BIER packet, where the first BIER packet includes a first BIERv6 header and multicast data, and the first BIERv6 header indicates a set of destination nodes of the multicast data; and the first site device determines, based on the first BIERv6 header, the first BIER forwarding entry, and the first mapping relationship, to forward the multicast data through the first SD-WAN tunnel.

In a possible implementation, the method further includes: The first site device receives third SD-WAN tunnel information advertised by the second site device, where the third SD-WAN tunnel information includes an IP address of the second site device and information about a site to which the second site device belongs; and the first site device establishes a third SD-WAN tunnel between the first site device and the second site device based on the third SD-WAN tunnel information, and stores a third mapping relationship between a next-hop site and the third SD-WAN tunnel, where the next-hop site in the third mapping relationship is the site to which the second site device belongs.

In a possible implementation, the method further includes: The first site device receives a first BIER packet, where the first BIER packet includes a first BIERv6 header and multicast data, and the first BIERv6 header indicates a set of destination nodes of the multicast data; and the first site device determines, based on the first BIERv6 header, the first BIER forwarding entry, and the third mapping relationship, to forward the multicast data through the third SD-WAN tunnel.

A fourth aspect of this application provides a communication apparatus, where the communication apparatus belongs to a first site device in an SD-WAN, and the communication apparatus includes: a receiving module, configured to receive a first packet, where the first packet includes a first bit index explicit replication IPv6 encapsulation BIERv6 header and multicast data, and the first BIERv6 header indicates a set of destination nodes of the multicast data; a processing module, configured to generate a second packet based on the first packet, where the second packet includes a first SD-WAN tunnel encapsulation header, a second BIERv6 header, and the multicast data, a destination address of the first SD-WAN tunnel encapsulation header is an IP address of a second site device, the IP address of the second site device is an egress address of a first SD-WAN tunnel between the first site device and the second site device, and the second BIERv6 header indicates the set of destination nodes of the multicast data; and a sending module, configured to send the second packet to the second site device through the first SD-WAN tunnel.

In a possible implementation, the first BIERv6 header is the same as the second BIERv6 header, and a destination address of the first BIERv6 header is an IPv6 address of a target site device. The processing module is further configured to determine, based on the IPv6 address of the target site device, to send the second packet to the target site device through the first SD-WAN tunnel.

In a possible implementation, the processing module is further configured to query a forwarding table based on the IPv6 address of the target site device, and determine that a next-hop outbound interface points to the first SD-WAN tunnel.

In a possible implementation, a destination address of the first BIERv6 header is an IPv6 address of the first site device, and a destination address of the second BIERv6 header is the IPv6 address of the target site device.

In a possible implementation, the processing module is further configured to determine the IPv6 address of the target site device and a next-hop site based on a bit string in the first BIERv6 header and a BIER forwarding table, where the next-hop site is a first site, and the target site device is located at the first site; and determine, based on the first site, to send the second packet to the second site device through the first SD-WAN tunnel.

In a possible implementation, the IPv6 address of the target site device identifies a site at which the target site device is located, and the site at which the target site device is located includes a plurality of site devices.

In a possible implementation, the IPv6 address of the target site device is a segment identifier SID of an End.BIER type.

In a possible implementation, the sending module is further configured to send first BIER information to the target site device, where the first BIER information includes at least one of the following information: the IPv6 address of the first site device, a BFR-ID of the first site device, and a BFR-prefix of the first site device; and the receiving module is further configured to receive second BIER information advertised by the target site device, where the second BIER information includes one or more of the following information: the IPv6 address of the target site device, a BFR-ID of the target site device, and a BFR-prefix of the target site device.

In a possible implementation, the first BIER information or the second BIER information is carried in a BGP packet.

In a possible implementation, the BGP packet includes a BGP shortest path first SPF address family packet, a BGP link state LS address family packet, or a BGP SD-WAN address family packet.

In a possible implementation, the first BIER information or the second BIER information is carried in a prefix network layer reachability information Prefix NLRI field in the BGP SPF address family packet or the BGP LS address family packet.

In a possible implementation, the processing module is further configured to generate a third packet based on the first packet, where the third packet includes a second SD-WAN tunnel encapsulation header, a third BIERv6 header, and the multicast data, a destination address of the second SD-WAN tunnel encapsulation header is an IP address of a third site device, the IP address of the third site device is an egress address of a second SD-WAN tunnel between the first site device and the third site device, and the third BIERv6 header indicates the set of destination nodes of the multicast data; and the sending module is further configured to send the third packet to the third site device through the second SD-WAN tunnel.

In a possible implementation, the communication apparatus is a CPE or a network POP site device.

A fifth aspect of this application provides a communication apparatus, where the communication apparatus belongs to a second site device in an SD-WAN. The communication apparatus includes a receiving module, a processing module, and a sending module. The receiving module is configured to receive, through a first SD-WAN tunnel, a first packet sent by a first site device, where the first packet includes a first SD-WAN tunnel encapsulation header, a first BIERv6 header, and multicast data, a destination address of the first SD-WAN tunnel encapsulation header is an IP address of the second site device, the IP address of the second site device is an egress address of the first SD-WAN tunnel between the first site device and the second site device, and the second BIERv6 header indicates the set of destination nodes of the multicast data; the processing module is configured to generate a second packet based on the first packet, where the second packet includes the multicast data; and the sending module is configured to forward the second packet.

In a possible implementation, the second packet includes a second SD-WAN tunnel encapsulation header, a second BIERv6 header, and the multicast data, a destination address of the second SD-WAN tunnel encapsulation header is an IP address of the third site device, the IP address of the third site device is an egress address of a second SD-WAN tunnel between the second site device and the third site device, and the second BIERv6 header indicates the set of destination nodes of the multicast data; and the sending module is configured to send the second packet to the third site device through the second SD-WAN tunnel.

In a possible implementation, the first BIERv6 header is the same as the second BIERv6 header, and a destination address of the first BIERv6 header is an IPv6 address of a target site device. The processing module is configured to determine to send the second packet to the target site device through the second SD-WAN tunnel.

In a possible implementation, a destination address of the first BIERv6 header is an IPv6 address of the second site device, and a destination address of the second BIERv6 header is an IPv6 address of a target site device.

A sixth aspect of this application provides a communication apparatus, where the communication apparatus belongs to a first site device in an SD-WAN, and the communication apparatus includes: a sending module, configured to send a first BGP packet to a second site device, where the first BGP packet carries first BIER information, and the first BIER information includes a BIER bit forwarding router identity BFR-ID of the first site device; a receiving module, configured to receive a second BGP packet advertised by a second site device, where the second BGP packet carries second BIER information, and the second BIER information includes a BFR-ID of the second site device; and a processing module, configured to generate a first BIER forwarding entry based on the second BGP packet, where the first BIER forwarding entry records a mapping relationship between the BFR-ID of the second site device and a next-hop site, and a BFR-ID in the first BIER forwarding entry indicates a BIER forwarding destination device.

In a possible implementation, the processing module is configured to determine, based on a topology of the SD-WAN, the next-hop site destined for the second site device.

In a possible implementation, the receiving module is further configured to receive first SD-WAN tunnel information advertised by a third site device, where the first SD-WAN tunnel information includes an IP address of the third site device and a site to which the third site device belongs; and the processing module is configured to establish a first SD-WAN tunnel between the first site device and the third site device based on the first SD-WAN tunnel information, and store a mapping relationship between a next-hop site and the first SD-WAN tunnel, where the next-hop site is the site to which the third site device belongs.

In a possible implementation, the receiving module is configured to receive third SD-WAN tunnel information advertised by the second site device, where the third SD-WAN tunnel information includes an IP address of the second site device and information about a site to which the second site device belongs; and the processing module is configured to establish a third SD-WAN tunnel between the first site device and the second site device based on the third SD-WAN tunnel information, and store a third mapping relationship between a next-hop site and the third SD-WAN tunnel, where the next-hop site in the third mapping relationship is the site to which the second site device belongs.

In a possible implementation, the receiving module is configured to receive a first BIER packet, where the first BIER packet includes a first BIERv6 header and multicast data, and the first BIERv6 header indicates a set of destination nodes of the multicast data; and the processing module is configured to determine, based on the first BIERv6 header, the first BIER forwarding entry, and the first mapping relationship, to forward the multicast data through the first SD-WAN tunnel.

A seventh aspect of this application provides a communication apparatus, including a receiving module, a processing module, and a sending module. The receiving module is configured to perform a receiving operation in any implementation of the first aspect, the second aspect, or the third aspect. The processing module is configured to perform a processing operation in any implementation of the first aspect, the second aspect, or the third aspect. The sending module is configured to perform a sending operation in any implementation of the first aspect, the second aspect, or the third aspect.

Alternatively, the receiving module is configured to perform an operation performed by the receiving module in any implementation of the fourth aspect, the fifth aspect, or the sixth aspect. The processing module is configured to perform an operation performed by the processing module in any implementation of the fourth aspect, the fifth aspect, or the sixth aspect. The sending module is configured to perform an operation performed by the sending module in any implementation of the fourth aspect, the fifth aspect, or the sixth aspect.

In a possible implementation, the communication apparatus belongs to a site device in an SD-WAN.

The communication apparatus in the fourth aspect to the seventh aspect may be a processor or a chip system in the site device, and is configured to perform the receiving operation, the processing operation, and the sending operation in the fourth aspect to the seventh aspect. Alternatively, the communication apparatus in the fourth aspect to the seventh aspect may be a site device. For example, the communication apparatus is specifically a network device such as a switch, a gateway, a router, or a hub. A specific form of the communication apparatus is not limited in this application.

An eighth aspect of this application provides a communication system, including a first communication apparatus and a second communication apparatus. The first communication apparatus is configured to perform an operation performed by the first site device in the first aspect or the third aspect, and the second communication apparatus is configured to perform an operation performed by the second site device in the second aspect.

A ninth aspect of this application provides a computer-readable storage medium, storing instructions, where when the instructions are run on a processor, the method according to any implementation of the first aspect to the third aspect is implemented.

A tenth aspect of this application provides a computer program product, where when the computer program product is run on a processor, the method according to any implementation of the first aspect to the third aspect is implemented.

An eleventh aspect of this application provides a chip, including one or more processors. A part or all of the processors are configured to read and execute computer instructions stored in the memory, to perform the method in any possible implementation of the foregoing aspects. Optionally, the chip further includes a memory. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. Optionally, the communication interface is an input/output interface or a bus interface. The method provided in this application is implemented by one chip, or is implemented by a plurality of chips in collaboration.

The solutions provided in the second aspect to the eleventh aspect are used to implement or cooperate to implement the method provided in the first aspect, and therefore can achieve beneficial effects the same as or corresponding to those in the first aspect. Details are not described herein again.

### BRIEF DESCRIPTION OF DRAWINGS

FIG. 1 is a schematic diagram of an SD-WAN according to an embodiment of this application;
FIG. 2 is a schematic diagram of implementing data multicast in a BIER network according to an embodiment of this application;
FIG. 3 is a schematic diagram of forwarding a multicast packet by searching a BIER forwarding table in a BIER network according to an embodiment of this application;
FIG. 4 is a schematic diagram of an SD-WAN according to an embodiment of this application;
FIG. 5 is a schematic diagram of generating a forwarding table by a site device in an SD-WAN according to an embodiment of this application;
FIG. 6 is a schematic diagram of generating a BIER forwarding table by a site device in an SD-WAN according to an embodiment of this application;
FIG. 7 is a schematic diagram of extending a BGP SPF address family packet to carry BIER information according to an embodiment of this application;
FIG. 8 is a schematic flowchart of a multicast communication method 800 according to an embodiment of this application;
FIG. 9 is a schematic diagram of determining a next-hop site based on a bit string and a BIER forwarding table according to an embodiment of this application;
FIG. 10 is a schematic diagram of a format of a multicast packet according to an embodiment of this application;
FIG. 11 is a schematic diagram of a format of a BIERv6 header according to an embodiment of this application;
FIG. 12 is a schematic flowchart of a multicast communication method 1200 according to an embodiment of this application;
FIG. 13 is a schematic flowchart of a multicast communication method 1300 according to an embodiment of this application;
FIG. 14 is a schematic flowchart of a multicast communication method 1400 according to an embodiment of this application;
FIG. 15 is a schematic diagram of a structure of a network device 1500 according to an embodiment of this application;
FIG. 16 is a schematic diagram of a structure of a network device 1600 according to an embodiment of this application;
FIG. 17 is a schematic diagram of a structure of a network device 1700 according to an embodiment of this application; and
FIG. 18 is a schematic diagram of a structure of a network device 1800 according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technologies in embodiments of this application.

### (1) SD-WAN

The SD-WAN is a network formed by applying an SDN technology to a wide area network scenario. The SD-WAN aims to reduce overheads of a wide area network and improve flexibility of network connection, providing secure and reliable interconnection services for enterprise networks and data center networks that are scattered in a wide geographical area.

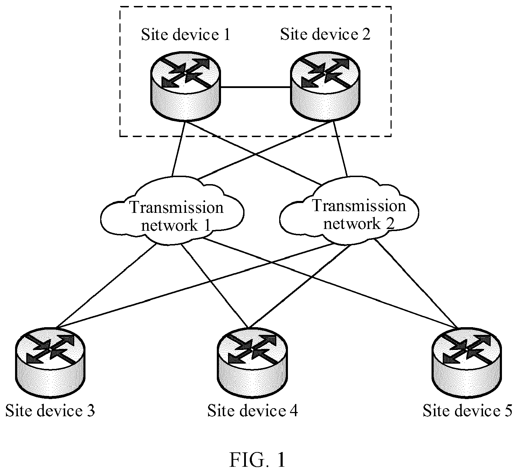

FIG. 1 is a schematic diagram of an SD-WAN according to an embodiment of this application. As shown in FIG. 1, an SD-WAN includes a site device 1 to a site device 5, and the site device 1 to the site device 5 are all connected to a transmission network 1 and a transmission network 2. In addition, the site device 1 may be connected to a site device 3 to the site device 5 through the transmission network 1 and the transmission network 2, and the site device 2 may also be connected to the site device 3 to the site device 5 through the transmission network 1 and the transmission network 2. The site device 1 and the site device 2 are, for example, headquarters site devices, and the site device 3 to the site device 5 are, for example, branch site devices. The site device 1 and the site device 2 that are used as the headquarters site devices may distribute data to the site device 3 to the site device 5 that are used as the branch site devices; or the site device 1 and the site device 2 are used as intermediate nodes to forward data transmitted between the branch site devices.

The site device 1 to the site device 5 may be CPEs or POP site devices. The transmission network 1 and the transmission network 2 are wide area networks provided by an operator, and are used to implement interconnection between site devices. For example, the transmission network 1 and the transmission network 2 may include an operator private line network, an internet (Internet) public network, and the like.

The transmission network 1 and the transmission network 2 are used as bearer networks, and SD-WAN tunnels may be deployed between different site devices. The SD-WAN tunnel is a logical channel between two site devices. Data may be transmitted between the two site devices through the SD-WAN tunnel. Generally, a physical outbound interface of the SD-WAN tunnel is a wide area network interface on the site device. That is, outbound interfaces at two ends of the SD-WAN tunnel are wide area network interfaces on the two site devices, and the wide area network interfaces on the two site devices may be interconnected through the bearer network.

### (2) Bit index explicit replication (Bit Index Explicit Replication, BIER)

The BIER is a novel multicast forwarding technology in which a set of destination nodes for which a multicast packet needs to be destined is encapsulated as a bit string (Bit String, BS) in a packet header and is sent. In this way, an intermediate node in a network does not need to sense a multicast service or maintain a multicast stream status. This can resolve a problem in a conventional multicast technology, and provides good multicast service scalability.

In a BIER network, based on a bit index forwarding table (Bit Index Forwarding Table, BIFT) created through the BIER technology on a bit forwarding router (Bit Forwarding Router, BFR), the BFR only needs to replicate and forward a packet based on the bit string, so that the packet may be multicast.

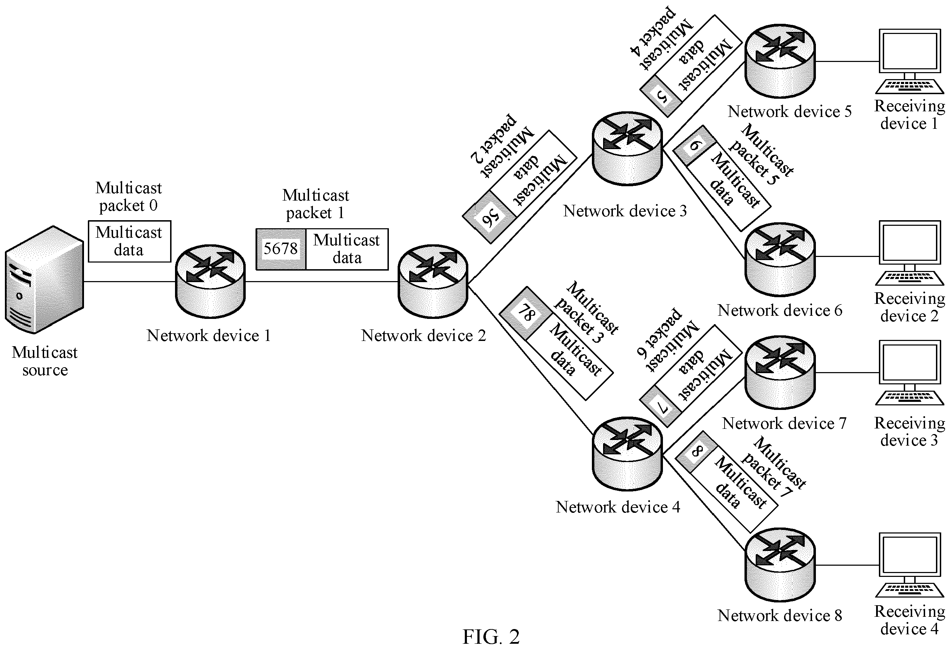

For example, FIG. 2 is a schematic diagram of implementing data multicast in a BIER network according to an embodiment of this application. As shown in FIG. 2, the BIER network includes a network device 1 to a network device 8, where the network device 1 to the network device 8 all have a BIER capability. The network device 1 is connected to a multicast source and a network device 2. The network device 2 is further connected to a network device 3 and a network device 4. The network device 3 is further connected to a network device 5 and a network device 6. The network device 4 is further connected to a network device 7 and the network device 8. In addition, the network device 5 to the network device 8 are respectively connected to the receiving device 1 to the receiving device 4.

In the BIER network shown in FIG. 2, the multicast source needs to send multicast data to the receiving device 1 to the receiving device 4 through the BIER network. First, the multicast source sends a multicast packet 0 to the network device 1, where the multicast packet 0 carries the multicast data. The network device 1 obtains a BS corresponding to the multicast data by searching the multicast forwarding table. The BS indicates a set of destination nodes of the multicast data. To be specific, the destination nodes of the multicast data are the network device 5 to the network device 8. Then, the network device 1 sends, to the network device 2, a multicast packet 1 in which the BS and the multicast data are encapsulated, to indicate that the destination nodes of the multicast data are the network device 5 to the network device 8.

After receiving the multicast packet 1, the network device 2 determines, based on the BS in the multicast packet 1, that next-hop devices are respectively the network device 3 and the network device 4. Therefore, the network device 2 sends a multicast packet 2 to the network device 3, where the multicast packet 2 carries the multicast data, and a BS in the multicast packet 2 indicates that destination nodes of the multicast data are the network device 5 and the network device 6. In addition, the network device 2 further generates a multicast packet 3 by replicating the multicast data, and sends a multicast packet 3 to the network device 4. The multicast packet 3 carries the multicast data, and a BS in the multicast packet 3 indicates that the destination nodes of the multicast data are the network device 7 and the network device 8.

After receiving the multicast packet 2, the network device 3 determines, based on the BS in the multicast packet 2, that next-hop devices are respectively the network device 5 and the network device 6. Similar to a forwarding process of the network device 2, the network device 3 sends, to the network device 5, a multicast packet 4 indicating that the destination node is the network device 5, and sends, to the network device 6, a multicast packet 5 indicating that the destination node is the network device 6.

Similar to a forwarding process of the network device 3, after the network device 4 receives the multicast packet 3, the network device 4 sends, to the network device 7, a multicast packet 6 indicating that the destination node is the network device 7, and sends, to the network device 8, a multicast packet 7 indicating that the destination node is the network device 8.

Finally, the network device 5 to the network device 8 separately send the multicast data to the receiving device 1 to the receiving device 4 based on the received multicast packet, to implement data multicast.

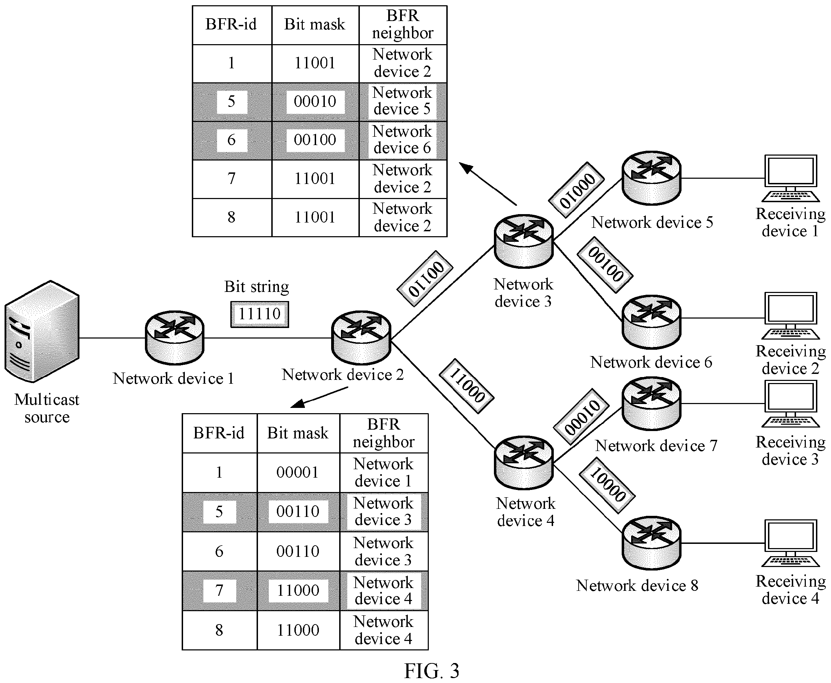

FIG. 3 is a schematic diagram of forwarding a multicast packet by searching a BIER forwarding table in a BIER network according to an embodiment of this application. As shown in FIG. 3, the BS uses bits at different positions to represent different network devices. When a bit in the BS is set to 1, it indicates that a network device corresponding to the bit belongs to a set of destination nodes of the multicast data. In FIG. 3, the BS has five bits. In an order from right to left, the five bits in the BS respectively represent the network device 1, the network device 5, the network device 6, the network device 7, and the network device 8. For example, a BS whose value is 00001 represents that the destination node is the network device 1; and a BS whose value is 00110 represents that the destination node is the network device 5 and the network device 6.

As shown in FIG. 3, a BIER forwarding table of the network device 2 includes a BIER bit forwarding router identity (Bit Forwarding Router Identity, BFR-ID), a bit mask, and a BFR neighbor. The BFR-id indicates an identifier of the destination node, the bit mask indicates a mask corresponding to the destination node, and the BFR neighbor indicates a next-hop neighbor of a multicast packet whose destination address is the destination node. When the network device 2 receives a BS whose value is 11110, the network device 2 performs a bit AND operation on the received BS and a bit mask in the BIER forwarding table. After the BS whose value is 11110 and a bit mask in the second forwarding entry and a bit mask in the fourth forwarding entry in the BIER forwarding table are located, a bit AND result whose values are not all 0 may be obtained. Therefore, the network device 2 sends, based on a result obtained by performing the bit AND operation, a BS whose value is 00110 (that is, a bit AND result of the BS whose value is 11110 and the bit mask 00110) to the network device 3 indicated by the second forwarding entry, and sends a BS whose value is 11000 (that is, a bit AND result of the BS whose value is 11110 and the bit mask 11000) to the network device 4 indicated by the fourth forwarding entry

Similarly, after the network device 3 receives the BS whose value is 00110, the network device 3 performs the bit AND operation on the BS and the bit mask in the BIER forwarding table. In the network device 3, after the BS whose value is 00110 and the bit mask in the second forwarding entry and the bit mask in the third forwarding entry in the BIER forwarding table are located, a bit AND result whose values are not all 0 may be obtained. Therefore, the network device 3 sends, based on a result obtained by performing the bit AND operation, a BS whose value is 00010 (that is, a bit AND result of the BS whose value is 00110 and the bit mask 00010) to the network device 5 indicated by the second forwarding entry, and sends a BS whose value is 00100 (that is, a bit AND result of the BS whose value is 00110 and the bit mask 00100) to the network device 4 indicated by the fourth forwarding entry

Currently, a manner of implementing a multicast service in the SD-WAN is to deploy a PIM protocol on each CPE, and establish a PIM multicast distribution tree for each multicast traffic in the network through the CPE With large-scale deployment of the multicast service, a quantity of to-be-maintained multicast distribution trees increases sharply, and each node device in the multicast distribution tree needs to store a large quantity of multicast stream states, to be specific, there are a large quantity of multicast entries in the node device. As a result, the multicast entries in the node device converge slowly when the network changes, and normal running of the multicast service is affected.

In view of this, embodiments of this application provide a multicast communication method. A BIER capability is deployed on a site device in an SD-WAN, a destination node of a multicast packet is indicated through a BIER header in the multicast packet, and a multicast distribution tree does not need to be constructed. In addition, the multicast packet is forwarded through an SD-WAN tunnel between the site devices, and an intermediate node does not need to sense a multicast service. In this way, a network device has a small quantity of multicast entries and the multicast entries are converged quickly, ensuring normal running of the multicast service.

Specifically, the multicast communication method provided in embodiments of this application may be applied to the SD-WAN shown in FIG. 1, and is used to implement a multicast service in the SD-WAN.

To facilitate understanding of the multicast communication method provided in embodiments of this application, the following first describes a process of deploying the SD-WAN tunnel between site devices in the SD-WAN, and deploying a BIER forwarding table in the site devices.

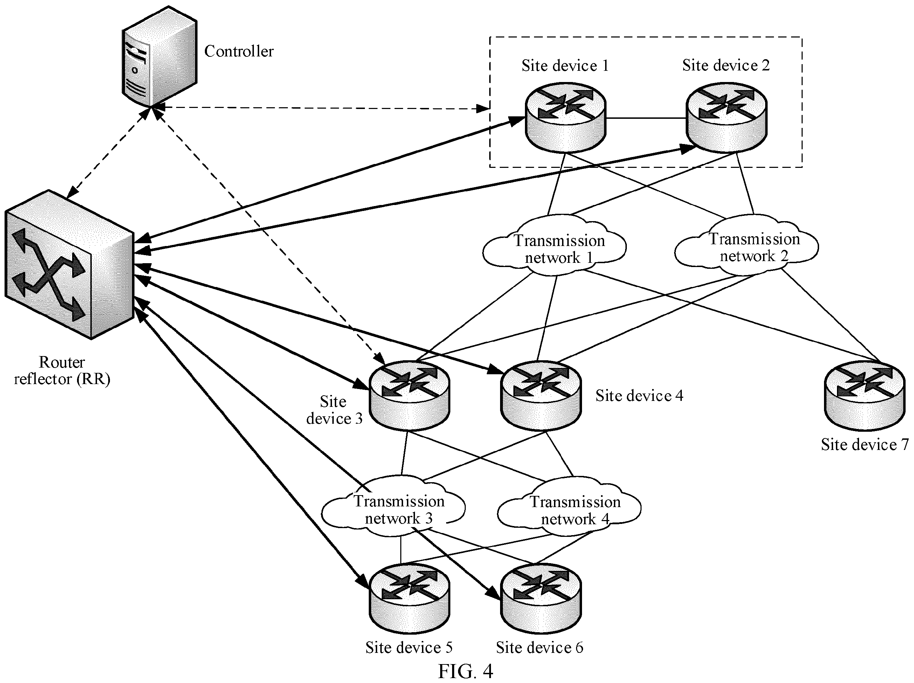

FIG. 4 is a schematic diagram of an SD-WAN according to an embodiment of this application. As shown in FIG. 4, an SD-WAN includes a site device 1 to a site device 7, a route reflector (Route Reflector, RR), and a controller. Both the site device 1 and a site device 4 access a transmission network 1 and a transmission network 2. In other words, the site device 1 and the site device 4 may be interconnected through the transmission network 1 and the transmission network 2. In addition, both a site device 3 and a site device 6 are connected to a transmission network 3 and a transmission network 4. In other words, the site device 3 and the site device 6 may be interconnected through the transmission network 3 and the transmission network 4. The site device 1 to the site device 6 are further connected to the RR, and are configured to implement advertisement of information between the site devices through the RR.

In addition, the controller is connected to the RR and each site device in the SD-WAN (to avoid complex lines in the accompanying drawings, FIG. 4 shows only connections between the controller and the RR, the site device 1, and the site device 3).

For example, in FIG. 4, the SD-WAN includes three types of channels: a management channel, a control channel, and a data channel. Specifically, detailed information of the three channels in the SD-WAN is shown in Table 1.

**Table 1**

| Channel type | Channel connection type | Channel position | Channel function |
|---|---|---|---|
| Management channel | NETCONF connection | Between a controller and a site device/an RR | A controller delivers a configuration to a site device/an RR |
| | DTLS connection | Between an RR and a site device | Exchange TNP information between a site device and an RR |
| Control channel | BGP connection | Between an RR and a site device | An RR reflects TNP information of a site device |
| Data channel | SD-WAN tunnel | Between site devices | Forward a data packet |

The following describes in detail a plurality of channels in the SD-WAN with reference to Table 1.

### 1. Network configuration protocol (Network Configuration Protocol, NETCONF) management channel

The NETCONF management channel is a connection channel between network devices such as a controller, a site device, and an RR. The controller may deliver configurations such as a basic network configuration, a VPN service parameter, and a route selection policy to network devices such as a site device and an RR through the NETCONF management channel. A basic network configuration includes the site device and system IP (System IP) of the RR. In addition, when there are a plurality of RRs in the SD-WAN, the controller may further allocate the RR to the site device.

The network device such as the site device and the RR may report network operation and maintenance information through NETCONF management channel, for example, performance collection information such as device alarm information, a device log, and network traffic.

### 2. Datagram transport layer security (Datagram Transport Layer Security, DTLS) management channel

The DTLS management channel is a connection channel used to exchange transport network point (Transport network point, TNP) information between the RR and the site device. The TNP information may include information such as a port IP address of the network device, an identifier of an operator network connected to a port of the network device, an identifier of a leased line network connected to the network device, and an identifier of a site at which the site device is located. In general, the TNP information may indicate information of a transmission network accessed by the RR/site device, and information of a port that is on the RR/site device and that is used to access the transmission network.

Based on the DTLS management channel, the RR may advertise TNP information of the RR; and the site device may also advertise the TNP information of the site device to the RR.

### 3. Border gateway protocol (Border Gateway Protocol, BGP) control channel

After the RR exchanges the TNP information with each site device, the RR and each site device create the BGP control channel between the RR and the site device based on the TNP information learned from each other. After the BGP control channel is established between the RR and the site device, the site device advertises the TNP information to the RR, so that the RR reflects the TNP information to another site device.

### 4. Data channel

When the site device receives TNP information of another site device reflected by the RR, an SD-WAN tunnel destined for a peer site device is established between the site devices based on the received TNP information, so that a data packet is subsequently transmitted through the SD-WAN tunnel.

In addition, in the SD-WAN, when the site device receives routing information advertised by other network devices, the site device may advertise the routing information to another site device through the RR, so that each site device may generate a forwarding table used to guide packet forwarding, and a forwarding path indicated in the forwarding table is related to the SD-WAN tunnel between the site devices.

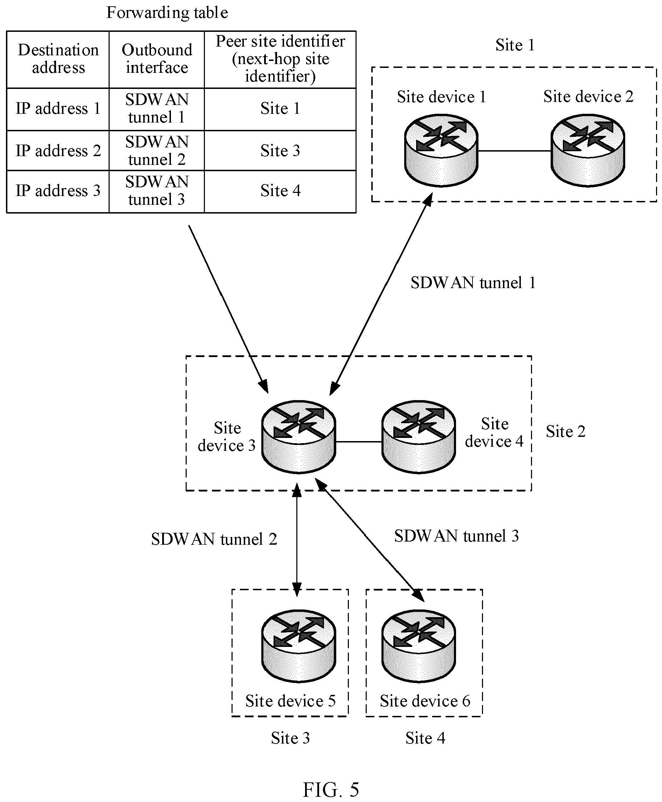

For example, FIG. 5 is a schematic diagram of generating a forwarding table by a site device in an SD-WAN according to an embodiment of this application. As shown in FIG. 5, a site device 1 and a site device 2 are located at a site 1, a site device 3 and a site device 4 are located at a site 2, a site device 5 is located at a site 3, and a site device 6 is located at a site 4.

After the site device 1, the site device 5, and the site device 6 advertise TNP information and routing information to the site device 3 through an RR, the site device 3 may establish an SD-WAN tunnel between the site device 1, the site device 5, and the site device 6, and generate a corresponding forwarding table. The TNP information may include a site identifier of a site at which the site device is located and related information required for creating the SD-WAN tunnel. For example, the TNP information includes a site to which the site device belongs and an IP address of the site device. Therefore, the site device 3 may generate a mapping relationship between the SD-WAN tunnel and a peer site of the SD-WAN tunnel based on the received TNP information.

As shown in FIG. 5, a mapping relationship between a destination address, an outbound interface, and a peer site identifier (that is, a next-hop site identifier) is recorded in a forwarding table generated by the site device 3. For example, in a first forwarding entry of the forwarding table, the destination address is an IP address 1, and the IP address 1 is an IP address of the site device 1 or an IP address in routing information sent by the site device 1 to the site device 3. An outbound interface corresponding to the IP address 1 points to an SD-WAN tunnel 1, to be specific, an SD-WAN tunnel between the site device 3 and the site device 1. A peer site identifier is the site 1, to be specific, a peer site of the SD-WAN tunnel 1 is the site 1.

In a second forwarding entry of the forwarding table, the destination address is an IP address 2, and the IP address 2 is an IP address of the site device 5 or an IP address in routing information sent by the site device 5 to the site device 3. An outbound interface corresponding to the IP address 2 points to an SD-WAN tunnel 2, to be specific, an SD-WAN tunnel between the site device 3 and the site device 5. A peer site identifier is the site 3, to be specific, a peer site of the SD-WAN tunnel 2 is the site 3.

Similarly, in a third forwarding entry of the forwarding table, the destination address is an IP address 3, and the IP address 3 is an IP address of the site device 6 or an IP address in routing information sent by the site device 6 to the site device 3. An outbound interface corresponding to the IP address 3 points to an SD-WAN tunnel 3, to be specific, an SD-WAN tunnel between the site device 3 and the site device 6. A peer site identifier is the site 4, to be specific, a peer site of the SD-WAN tunnel 3 is the site 4.

It may be learned from FIG. 5 that a forwarding table related to the SD-WAN tunnel records a mapping relationship between the SD-WAN tunnel and a peer site identifier of the SD-WAN tunnel when the outbound interface points to the SD-WAN tunnel.

Optionally, in some embodiments, the site device may also directly record the mapping relationship between the SD-WAN tunnel and the peer site identifier of the SD-WAN tunnel, for example, generate a mapping table used to record the mapping relationship between the SD-WAN tunnel and the peer site identifier of the SD-WAN tunnel.

In general, when the site device establishes the mapping relationship between the SD-WAN tunnel and the peer site identifier of the SD-WAN tunnel, the site device may determine, through the mapping relationship in a case of determining a next-hop site identifier, that the outbound interface points to an SD-WAN tunnel corresponding to the next-hop site identifier

In a process in which the site device generates a BIER forwarding table, the site device advertises BIER information to another site device through the RR. The BIER information includes, for example, a BFR-ID of the site device, a BIER bit forwarding router-prefix (BFR-Prefix) of the site device, and an IPv6 address of the site device. The IPv6 address of the site device may be a segment identifier (segment identifier, SID) of an End.BIER type. The SID of the site device is a new type of SID defined by a BIERv6 network, and is essentially an IPv6-based segment routing (Segment Routing IPv6, SRv6) SID, also referred to as an End.BIER address, and may be used as the destination address of the IPv6 header to indicate the network device to process the IPv6 header or forward the IPv6 packet. For ease of description, End.BIER is used to describe the IPv6 address of the site device.

After the site device receives the BIER information advertised by another site device, the site device may generate a BIER forwarding table based on the received BIER information and a topology of the SD-WAN. The BIER forwarding table is used to record a mapping relationship between a BFR-ID, a next-hop site, and End.BIER of the next-hop site.

In addition, the site device may obtain the topology of the SD-WAN through receiving SD-WAN tunnel information advertised by another site device. Specifically, for a site device in the SD-WAN, each site device advertises, to another site device, SD-WAN tunnel information established between the site device and another site device. Therefore, after any site device receives the SD-WAN tunnel information advertised by each another site device, the site device may obtain a tunnel connection relationship between the site devices in the SD-WAN, to be specific, obtain the topology of the entire SD-WAN. The topology of the SD-WAN is used to describe a connection relationship of the SD-WAN tunnel established between site devices in the SD-WAN. In this way, when using another site device as a destination address, the site device may obtain a next-hop site destined for the another site device through calculation based on the topology of the SD-WAN.

For example, it is assumed that the SD-WAN includes a site device A to a site device E, and the site device A receives SD-WAN tunnel information advertised by a site device B to the site device E. The SD-WAN tunnel information advertised by the site device B is: The site device B establishes an SD-WAN tunnel with the site device A and a site device C; SD-WAN tunnel information advertised by the site device C is: The site device C establishes an SD-WAN tunnel with the site device B; SD-WAN tunnel information advertised by a site device D is: The site device D establishes an SD-WAN tunnel with the site device A and the site device E; and SD-WAN tunnel information advertised by the site device E is: The site device E establishes an SD-WAN tunnel with the site device D and the site device C.

In this case, the site device A may obtain the topology of the SD-WAN based on SD-WAN tunnel information advertised by the site device B to the site device E. Specifically, the topology of the SD-WAN is: The site device A establishes an SD-WAN tunnel with the site device B and the site device D, and the site device B further establishes an SD-WAN tunnel with the site device C; and the site device C further establishes a tunnel with the site device E, and the site device D further establishes an SD-WAN tunnel with the site device E. That is, the topology of the SD-WAN may describe an SD-WAN tunnel connection relationship of each site device as [A-B-C] and [A-D-E-C].

For example, when the site device A uses the site device C as a destination address, the site device A may obtain, through calculation on the topology of the SD-WAN through a shortest path algorithm, that a next-hop site destined for the site device C is the site device B.

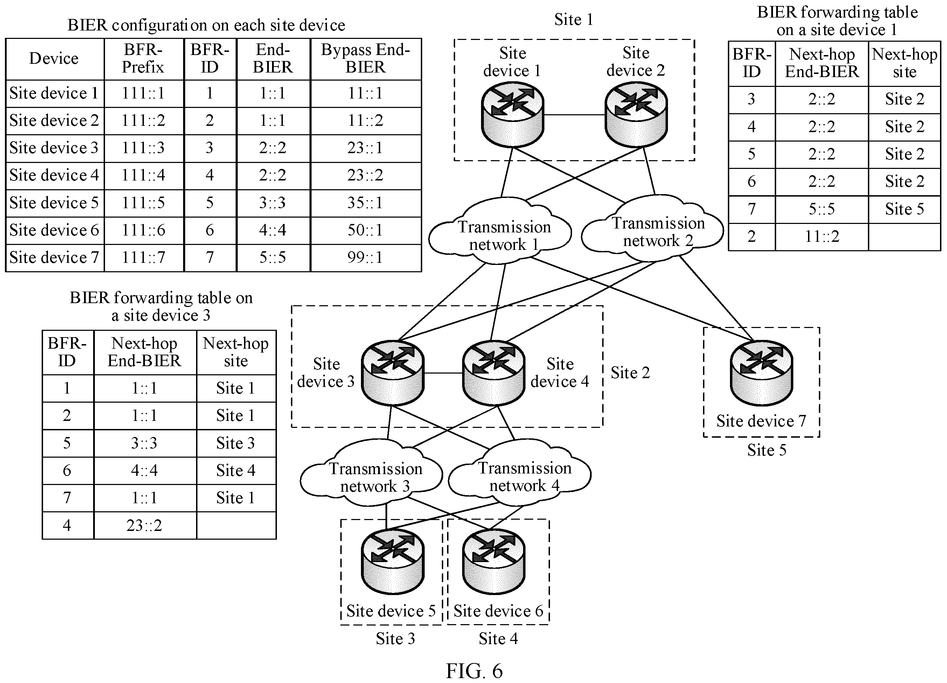

For example, FIG. 6 is a schematic diagram of generating a BIER forwarding table by a site device in an SD-WAN according to an embodiment of this application. As shown in FIG. 6, in the SD-WAN, each site device is configured with a unique BFR-prefix and a unique BFR-ID. Site devices in the same site have same End.BIER. For example, End.BIER corresponding to the site device 1 and End.BIER corresponding to the site device 2 located in the site 1 are 1::1; End.BIER corresponding to the site device 3 and End.BIER corresponding to the site device 4 located in the site 2 are 2::2; End.BIER corresponding to the site device 5 located in the site 3 is 3::3; End.BIER corresponding to the site device 6 located in the site 4 is 4::4; and End.BIER corresponding to the site device 7 located in the site 5 is 5::5. In addition, different Bypass End.BIER may be configured for site devices in the same site, so that the site devices in the same site may exchange data. For example, Bypass End.BIER of the site device 1 in the site 1 is 11:: 1, Bypass End.BIER of the site device 2 in the site 1 is 11: :2, Bypass End.BIER of the site device 3 in the site 2 is 23::1, and Bypass End.BIER of the site device 4 in the site 2 is 23: :2.

Optionally, the site devices in the same site may be configured with different End.BIER. To be specific, each site device is configured with unique End.BIER. A configuration manner of End.BIER is not limited in this embodiment.

In FIG. 6, each site device advertises BIER information of the site device to another site device through an RR, where the BIER information may include a BFR-prefix, a BFR-ID, End.BIER, and Bypass End.BIER of the site device. Each site device may generate a corresponding BIER forwarding table based on the BIER information obtained from another site device.

As shown in FIG. 6, for the site device 1, the site device 1 generates a BIER forwarding table of the site device 1 based on BIER information obtained from the site device 2 to the site device 7. The BIER forwarding table in the site device 1 records a mapping relationship between a BFR-ID of the site device, next-hop End.BIER, and a next-hop site. For example, in the BIER forwarding table, the BFR-ID in the first forwarding entry is 3, next-hop End.BIER is 2::2, and the next-hop site is 2. In other words, in the site device 1, for a packet destined for the site device 3 whose BFR-ID is 3, next-hop End.BIER is 2::2, and the next-hop site is 2. For another example, in the BIER forwarding table, the BFR-ID in the third forwarding entry is 5, next-hop End.BIER is 2::2, and the next-hop site is 2. In other words, in the site device 1, for the packet destined for the site device 5 whose BFR-ID is 5, next-hop End.BIER is 2::2, and the next-hop site is 2. To be specific, the site device 1 sends, to the site device 3, the packet destined for the site device 5, so that the site device 3 continues to forward the packet to the site device 5. In addition, in the BIER forwarding table of the site device 1, for a forwarding entry whose BFR-ID is 2, because the site device 1 and the site device 2 are located at a same site, next-hop End.BIER is Bypass End.BIER (11::2) of the site device 2, and a next-hop site is empty.

Similarly, for the site device 3, the site device 3 generates a BIER forwarding table of the site device 3 based on BIER information obtained from the site device 1, 2, and 4 to 7. The BIER forwarding table on the site device 3 also records a mapping relationship between a BFR-ID of the site device, next-hop End.BIER, and a next-hop site.

Optionally, the BIER forwarding table generated by the site device may further include a bit mask used to perform a bit AND operation with a BS. To be specific, a same BIER forwarding entry includes a mapping relationship between a BFR-ID, a bit mask, a next-hop site, and an SID of the next-hop site. The BIER forwarding table shown in FIG. 6 does not show a bit mask.

It may be learned from FIG. 5 and FIG. 6 that, when the site device determines a next-hop site based on the BIER forwarding table shown in FIG. 6, the site device may determine, based on the mapping relationship between the site identifier and the SD-WAN tunnel shown in FIG. 5, an SD-WAN tunnel used to perform packet forwarding, so that BIER multicast forwarding may be implemented through the SD-WAN tunnel.

The foregoing describes a process in which the site device generates a BIER forwarding table based on BIER information advertised by another site device. It should be understood that in this embodiment, the BIER information is advertised only between site devices in the SD-WAN, but not between all network devices in the network. Therefore, in this embodiment, an existing protocol packet is extended, so that the BIER information is advertised only between the site devices in the SD-WAN.

Specifically, the site device may advertise a BGP packet to another site device, where the BIER information is carried in the BGP packet. The BGP packet may include, for example, a BGP shortest path first (shortest path first, SPF) address family packet, a BGP link state (link state, LS) address family packet, or a BGP SD-WAN address family packet.

In a possible implementation, a prefix network layer reachability information (Prefix Network Layer Reachability Information, Prefix NLRI) field in the BGP SPF address family packet or the BGP LS address family packet is extended to carry the BIER information.

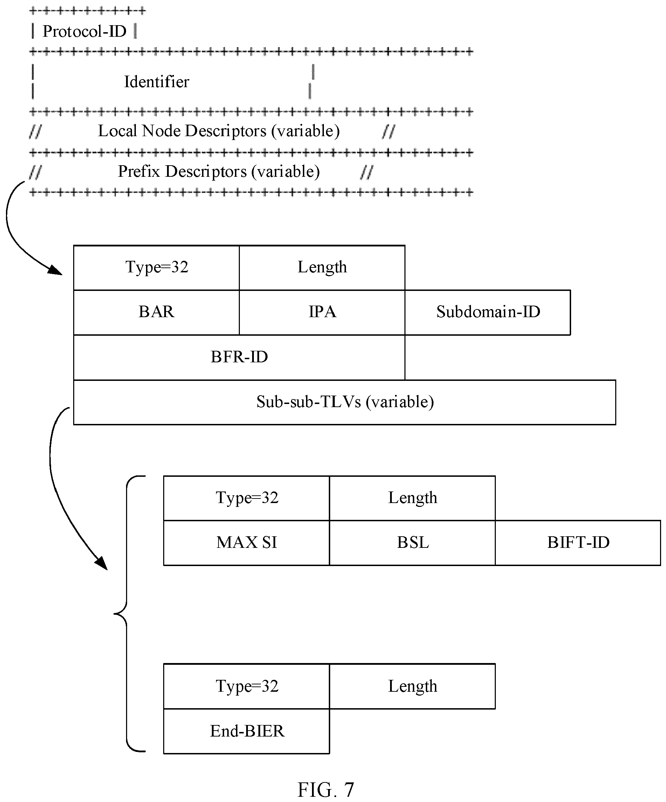

For example, FIG. 7 is a schematic diagram of extending a BGP SPF address family packet to carry BIER information according to an embodiment of this application. As shown in FIG. 7, the BGP SPF address family packet includes the following fields: a protocol-ID (Protocol-ID) field, an identifier (Identifier) field, a local node descriptors (Local Node Descriptors) field, and a prefix descriptors (Prefix Descriptors) field. The local node descriptors field is a type-length-value (type-length-value, TLV) field, and the prefix descriptors field is the foregoing Prefix NLRI. A sub-TLV (Sub-TLV) is obtained by extending the local node descriptors field. A type of the sub-TLV is 32, and BIER information carried in the sub-TLV includes a subdomain-ID (Subdomain-ID) and a BFR-ID. In addition, two sub-sub-TLVs may be further obtained by extending in the sub-TLV BIER information carried in a first sub-sub-TLV includes: a maximum set identifier (Maximum Set Identifier, MAX SI), a bit string length (Bit String Length, BSL), and a BIER bit index forwarding table identifier (bit index forwarding table identifier, BIFT-ID). The MAX SI indicates a maximum length of the BS, and the BSL indicates a bit string length in BIER encapsulation. BIER information carried in a second sub-sub-TLV includes End.BIER.

It may be understood that FIG. 7 shows a specific manner of extending the TLV field, namely, the local node descriptors field, to carry the BIER information. During actual application, another TLV in the BGP SPF address family packet or the BGP LS address family packet may alternatively be extended to carry the BIER information. This is not specifically limited in this embodiment.

In another possible implementation, an SD-WAN NLRI attribute field in the BGP SD-WAN address family packet is extended to carry the BIER information.

The foregoing describes a specific manner of extending the existing BGP address family packet to carry the BIER information. During actual application, the BIER information may alternatively be carried in another protocol packet. This is not specifically limited in this embodiment. In addition, in addition to extending an existing protocol packet to carry the BIER information, a new protocol packet may be added to carry the BIER information, for example, a BGP address family packet is newly added to carry the BIER information.

The foregoing describes a process in which the protocol packet is extended to carry the BIER information, so that the BIER information is advertised between site devices, and the site devices generate a BIER forwarding table. After the site device generates the mapping relationship between the SD-WAN and the site identifier and the BIER forwarding table, the site device may forward the BIER packet based on the SD-WAN tunnel.

However, for a site device (for example, a site device connected to a multicast source or a site device served as a multicast source) that first obtains multicast data, the site device needs to generate a BS based on a multicast group of the multicast data, to guide another site device to forward the multicast data. The multicast group refers to the destination address of the multicast data. For a network device that needs to receive the multicast data, the network device needs to join the multicast group in advance. In other words, the first site device that obtains the multicast data needs to learn multicast group information in the SD-WAN, so that when obtaining the multicast data, a corresponding BS may be generated based on a multicast group corresponding to the multicast data.

In this embodiment, when the site device receives multicast group join request information sent by a receiving device of the multicast data, the site device advertises, through a BGP multicast VPN (Multicast VPN, MVPN) address family packet, information that the receiving device joins the multicast to another site device, so that the another site device may generate corresponding multicast group information.

For example, using the site device 5 in FIG. 6 as an example, the site device 5 is further connected to the receiving device. The receiving device sends multicast group join request information to the site device 5, to indicate that the receiving device requests to join a specific multicast group. For example, the multicast group join request information includes (*, G) join information or (S, G) join information. Key information of the (*, G) join information is (RD, Source AS, RP, G, Originating IP). RD refers to a routing domain (Routing Domain) of the receiving device. Source AS refers to a source autonomous system (Source Autonomous System). RP refers to a rendezvous point (rendezvous point). G refers to a multicast group. Originating IP refers to a source IP address of an access device. The key information of the (S, G) join information is (RD, Source AS, S, G, Originating IP), where S refers to a multicast source. After obtaining the multicast group join request information sent by the receiving device, the site device 5 may advertise, information of joining, by the receiving device, the multicast through an RR, to another site device (for example, the site devices 1 to 4), where the information of joining, by the receiving device, the multicast may refer to the (*, G) join information or the (S, G) join information. After receiving the information that is advertised by the site device 5 and that is about joining, by the receiving device, the multicast, the another site device may determine a multicast group in which the receiving device joins, and then determine a set of destination nodes of the multicast packet based on the multicast group.

The foregoing describes deployment processes such as creating an SD-WAN tunnel, generating a BIER forwarding table, and generating multicast group information on the site device in the SD-WAN. The following describes a process of how the site device in the SD-WAN implements BIER multicast based on the foregoing deployment.

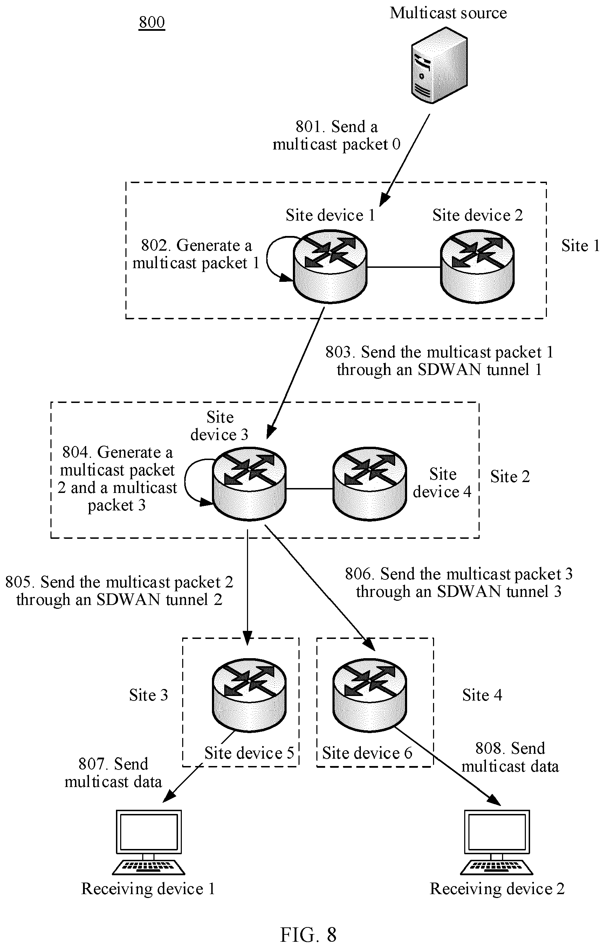

FIG. 8 is a schematic flowchart of a multicast communication method 800 according to an embodiment of this application. As shown in FIG. 8, the multicast communication method 800 includes the following step 801 to step 808.

Step 801. A multicast source sends a multicast packet 0 to a site device 1.

In this embodiment, the multicast source is a sender of multicast data, and is responsible for sending the multicast data to each device that joins a multicast group. The multicast packet 0 includes the multicast data, and the multicast packet 0 further indicates the multicast group corresponding to the multicast data.

Step 802. The site device 1 generates a multicast packet 1 based on the multicast packet 0.

Because the multicast packet 0 indicates the multicast group corresponding to the multicast data, the site device 1 may determine a BIER forwarding table and a bit string based on the multicast group corresponding to the multicast data through querying a multicast forwarding table. The site device 1 performs a bit AND operation on the bit string and a bit mask in the BIER forwarding table, to determine that a next-hop site of the multicast data is a site device 3. Then, based on that the next-hop site is the site 3, the site device 1 determines, through querying a mapping relationship between the next-hop site and an SD-WAN tunnel, an SD-WAN tunnel 1 for forwarding the multicast data. Second, the site device 1 encapsulates a first bit index explicit replication IPv6 encapsulation (Bit Index Explicit Replication IPv6 encapsulation, BIERv6) header at an outer layer of the multicast data, where the first BIERv6 header is obtained by extending an IPv6 header. A destination options header (Destination Options Header, DOH) in the IPv6 header carries a BIER header, to obtain the first BIERv6 header including an IPv6 basic header and the BIER header. In the first BIERv6 header, a destination address of the IPv6 basic header is an SID of the site device 3, and a bit string of the BIER header is a result of performing the bit AND operation by the site device 1. In addition, the site device 1 further encapsulates an SD-WAN tunnel encapsulation header at an outer layer of the first BIERv6 header based on information about the SD-WAN tunnel 1, to obtain the multicast packet 1.

Step 803. The site device 1 sends the multicast packet 1 to a site device 3 through the SD-WAN tunnel 1.

The site device 1 and the site device 3 are two endpoints of the SD-WAN tunnel 1.

Step 804. The site device 3 generates a multicast packet 2 and a multicast packet 3 based on the multicast packet 1.

After receiving the multicast packet 1 through the SD-WAN tunnel 1, because the site device 3 is the endpoint of the SD-WAN tunnel 1, the site device 3 decapsulates the SD-WAN tunnel encapsulation header in the multicast packet 1, to obtain the first BIERv6 header and the multicast data.

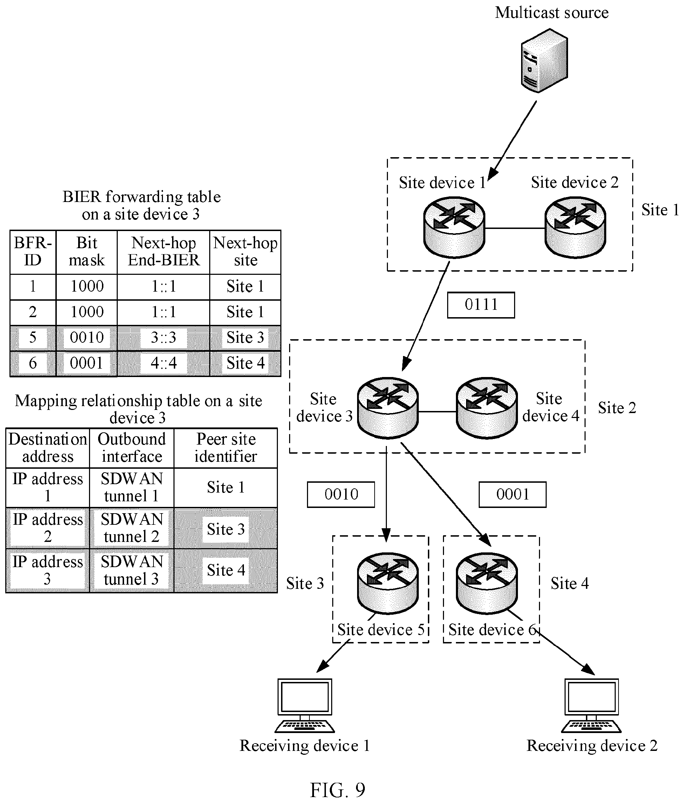

Then, the site device 3 determines that next-hop sites are the site 3 and a site 4 based on the bit string in the first BIERv6 header and a BIER forwarding table in the site device 3. For example, FIG. 9 is a schematic diagram of determining a next-hop site based on a bit string and a BIER forwarding table according to an embodiment of this application. As shown in FIG. 9, a bit string in a first BIERv6 header of a multicast packet 1 sent by a site device 1 to a site device 3 is 0111, where bits in the bit string respectively indicate a site 1, a site 2, a site 3, and a site 4 from left to right. Therefore, the bit string whose value is 0111 in the first BIERv6 header indicates that a set of destination nodes of multicast data is the site 2, the site 3, and the site 4. The site device 3 performs a bit AND operation on the bit string whose value is 0111 and a bit mask in a BIER forwarding table, and determines that forwarding entries whose bit masks are 0010 and 0001 respectively match the bit string. Therefore, the site device 3 determines that next-hop sites are the site 3 and the site 4.

Further, based on a mapping relationship on the site device 3 and the next-hop sites being the site 3 and the site 4, the site device 3 determines that when the next-hop site is the site 3, an outbound interface points to the SD-WAN tunnel 1 and a destination address corresponding to the SD-WAN tunnel 1 is an IP address 2, and determines that when the next-hop site is the site 4, an outbound interface points to an SD-WAN tunnel 3 and a destination address corresponding to the SD-WAN tunnel 3 is an IP address 3.

Optionally, when the site device 3 determines, based on the mapping relationship between the next-hop site and an SD-WAN tunnel, the SD-WAN tunnel corresponding to the next-hop site, a same next-hop site may correspond to one or more SD-WAN tunnels, and the site device 3 may select one of a plurality of SD-WAN tunnels to forward a packet. For example, when the site device 3 determines, based on that the next-hop site is a site 1, the SD-WAN tunnel corresponding to the next-hop site, the site device 3 may determine that the SD-WAN tunnel includes an SD-WAN tunnel between the site device 3 and the site device 1 and an SD-WAN tunnel between the site device 3 and a site device 2. Therefore, the site device 3 may select one of the SD-WAN tunnels as a packet forwarding path. Specifically, the site device 3 may select, based on a preconfigured load balancing policy or link quality of a tunnel, the SD-WAN tunnel for forwarding the packet. This is not specifically limited in this embodiment.

Based on the foregoing information obtained by searching the BIER forwarding table and the mapping relationship, the site device 3 performs packet header encapsulation on the multicast data, to obtain the multicast packet 2 and the multicast packet 3. Specifically, the site device 3 first encapsulates a second BIERv6 header at the outer layer of the multicast data, where a format of the second BIERv6 header is the same as a format of the first BIERv6 header In the second BIERv6 header, a destination address in an IPv6 basic header is an IPv6 address of a site device 5, namely, next-hop End.BIER (End.BIER 3::3 of the site 3) in a BIER forwarding entry, and a bit string in a BIER header is 0010. Then, the site device 3 encapsulates a first SD-WAN tunnel encapsulation header at an outer layer of the second BIERv6 header, to obtain the multicast packet 2. A destination address of the first SD-WAN tunnel encapsulation header is a destination address of a peer device of the SD-WAN tunnel 1 (namely, a destination address of the site device 5: the IP address 2). In other words, the multicast packet 2 includes the first SD-WAN tunnel encapsulation header, the second BIERv6 header, and the multicast data.

Similarly, the site device 3 replicates the multicast data, and encapsulates a third BIERv6 header at an outer layer of multicast data obtained through replication, where a format of the third BIERv6 header is the same as the format of the first BIERv6 header. In the third BIERv6 header, a destination address in an IPv6 basic header is an SID of a site device 6, namely, End.BIER 4::4 of the site 4 in the BIER forwarding entry, and a bit string in a BIER header is 0001. Then, the site device 3 encapsulates a second SD-WAN tunnel encapsulation header at an outer layer of the third BIERv6 header, to obtain the multicast packet 3. A destination address of the second SD-WAN tunnel encapsulation header is a destination address of a peer device of the SD-WAN tunnel 2 (namely, a destination address of the site device 6: the IP address 3). In other words, the multicast packet 3 includes the second SD-WAN tunnel encapsulation header, the third BIERv6 header, and the multicast data.

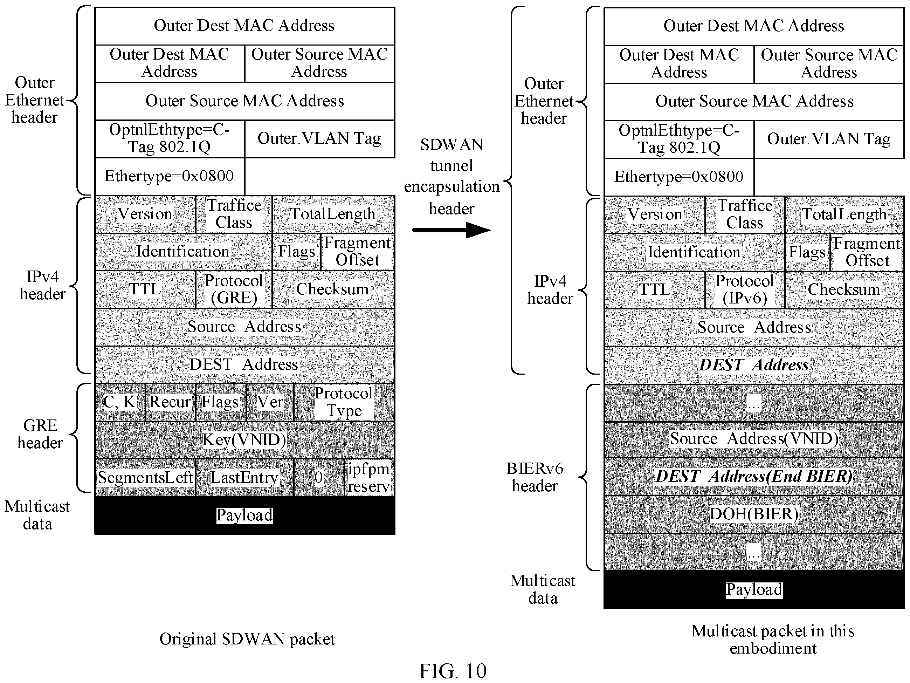

For example, FIG. 10 is a schematic diagram of a format of a multicast packet according to an embodiment of this application. As shown in FIG. 10, in this embodiment, an SD-WAN tunnel-based multicast packet is obtained by extending an original SD-WAN packet. The original SD-WAN packet includes an outer Ethernet header, an IPv4 header, a generic routing encapsulation (Generic Routing Encapsulation, GRE) header, and multicast data. In this embodiment, a multicast packet (for example, the foregoing multicast packet 2 and multicast packet 3) generated by a site device includes an outer Ethernet header, an IPv4 header, a BIERv6 header, and multicast data. The outer Ethernet header and the IPv4 header form an SD-WAN tunnel encapsulation header. In addition, a protocol (Protocol) field in the IPv4 header indicates that a next header is an IPv6 header.

Optionally, in the original SD-WAN packet, a key (key) in the GRE header indicates a virtual private network identifier (Virtual Private Network Identifier, VNID), so that a network device can subsequently forward the packet to a receiving device in a specific VPN by using the VNID. In this embodiment, the multicast packet no longer carries the GRE, and the VNID in the GRE is carried in a source address (Source Address) field in the BIERv6 header

In the SD-WAN tunnel encapsulation header of the multicast packet, a destination address (DEST Address) in the IPv4 header is an IP address of a peer site device of an SD-WAN tunnel, namely, an egress address of the SD-WAN tunnel. For example, in the multicast packet 2, the destination address of the first SD-WAN tunnel encapsulation header is the destination address of the peer device (the site device 5) of the SD-WAN tunnel 1.

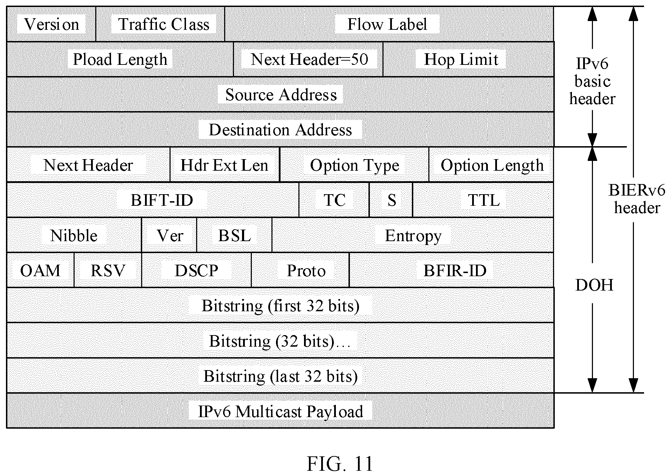

FIG. 11 is a schematic diagram of a format of a BIERv6 header according to an embodiment of this application. As shown in FIG. 11, the BIERv6 header of a multicast packet includes an IPv6 basic header and a BIER header, where the BIER header is obtained by extending a DOH in the IPv6 header. Specifically, a destination address (Destination Address) in the IPv6 basic header is an SID of a next-hop site, and a bit string in the BIER header indicates a set of destination nodes of multicast data.

The following briefly describes key fields in the BIER header.

Option Length: indicates an ID of a BIER forwarding table.

Time to live (Time To Live, TTL): indicates a quantity of hops that a packet on which BIERv6 forwarding is performed passes through. A TTL value decreases by 1 each time the packet passes through one BIERv6 forwarding node. When the TTL is 0, the packet is discarded.

Ver: indicates a BIERv6 packet format version.

BitString Length (BitString Length, BSL): indicates a BitString Length. A value 0001 indicates that the BSL is 64 bits, 0010 indicates that the BSL is 128 bits, and 0011 indicates that the BSL is 256 bits. One or more BSLs may be configured in one BIERv6 subdomain.

Proto: a next-layer protocol identifier, which identifies a Payload type after the BIERv6 packet header.

Step 805. The site device 3 sends the multicast packet 2 to a site device 5 through the SD-WAN tunnel 2.

After obtaining the multicast packet 2, the site device 3 sends the multicast packet 2 to the site device 5 through the SD-WAN tunnel 2. The site device 3 and the site device 5 may be directly connected, or another network device may be connected between the site device 3 and the site device 5. When the another network device is connected between the site device 3 and the site device 5, the another network device forwards the multicast packet 2 based on the destination address (namely, an IP address of the site device 5) in the first SD-WAN tunnel encapsulation header of the multicast packet 2.

Step 806. The site device 3 sends the multicast packet 3 to a site device 6 through the SD-WAN tunnel 3.

In this embodiment, step 806 is similar to step 805. For details, refer to step 805. Details are not described herein again.

Step 807. The site device 5 sends the multicast data in the multicast packet 2 to a receiving device 1.

After the site device 5 receives the multicast packet 2, the site device 5 decapsulates the first SD-WAN tunnel header in the multicast packet 2. Because the destination address in the second BIERv6 header in the multicast packet 2 is the IPv6 address of the site device 5, the site device 5 queries a BIER forwarding table based on the bit string in the second BIERv6 header. In a process in which the site device 5 queries the BIER forwarding table based on the bit string, the BIER forwarding table in the site device 5 does not have a forwarding entry that matches the bit string. Therefore, the site device 5 may determine that the site device 5 is an end point of BIER forwarding. The site device 5 decapsulates the second BIERv6 header in the multicast packet 2, and sends the multicast data to the receiving device 1 based on an indication of the multicast data.

Step 808. The site device 6 sends the multicast data in the multicast packet 3 to a receiving device 2.

In this embodiment, step 808 is similar to step 807. For details, refer to step 807. Details are not described herein again.

The foregoing describes how to implement multicast packet forwarding between site devices when all site devices in the SD-WAN have a BIER capability. The following describes how to implement multicast packet forwarding between site devices when some site devices in the SD-WAN do not have the BIER capability.

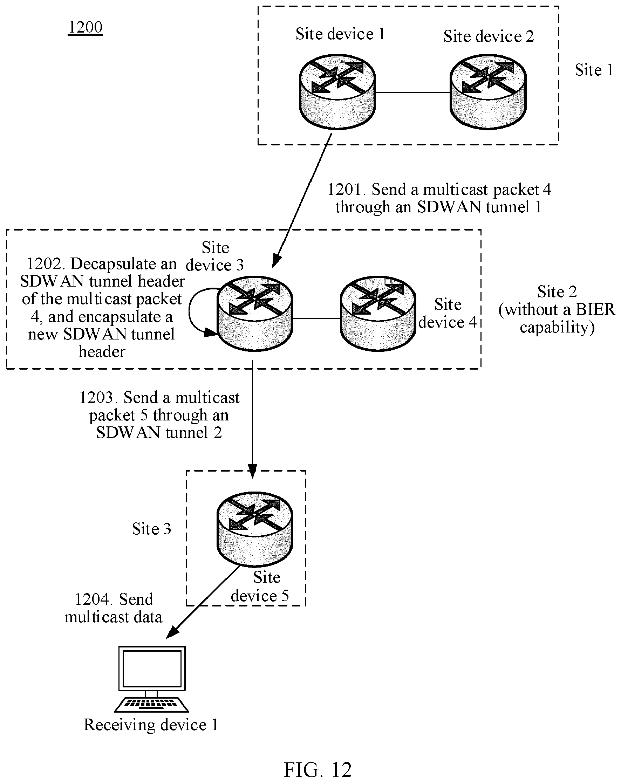

FIG. 12 is a schematic flowchart of a multicast communication method 1200 according to an embodiment of this application. As shown in FIG. 12, the multicast communication method 1200 includes the following step 1201 to step 1204.

Step 1201. The site device 1 sends the multicast packet 4 to a site device 3 through the SD-WAN tunnel 1.

In this embodiment, the site device 3 in the site 2 does not have the BIER capability. The multicast packet 4 generated by the site device 1 includes an SD-WAN tunnel encapsulation header, a BIERv6 header, and multicast data, and the destination address in the BIERv6 header is an SID of the site device 5.

Step 1202. The site device 3 decapsulates an SD-WAN tunnel encapsulation header of the multicast packet 4, and encapsulates a new SD-WAN tunnel encapsulation header, to obtain a multicast packet 5.

After the site device 3 receives the multicast packet 4, the site device 3 decapsulates the SD-WAN tunnel encapsulation header at an outer layer of the multicast packet 4, to obtain the BIERv6 header in the multicast packet 4 and the multicast data. Because the site device 3 does not have the BIER capability, the site device 3 queries the forwarding table based on the destination address in the BIERv6 header, and determines that a next-hop address is an egress address of the SD-WAN tunnel 2 between the site device 3 and the site device 5. The site device 3 reencapsulates the SD-WAN tunnel encapsulation header in the BIERv6 header and at an outer layer of the multicast data, to obtain the multicast packet 5. A destination address of the SD-WAN tunnel encapsulation header in the multicast packet 5 is an address of the site device 5, that is, an egress address of the SD-WAN tunnel 2.

Step 1203. The site device 3 sends the multicast packet 5 to a site device 5 through the SD-WAN tunnel 2.

Step 1204. The site device 5 decapsulates the multicast packet 5, and sends the multicast data to the receiving device 1.

After receiving the multicast packet 5, the site device 5 first decapsulates the SD-WAN tunnel encapsulation header at an outer layer of the multicast packet 5. Because a destination address of the BIERv6 header in the multicast packet 5 is an IPv6 address of the site device 5, the site device 5 extracts a bit string in the BIERv6 header, and searches a BIER forwarding table based on the bit string. By searching the BIER forwarding table, the site device 5 determines that the site device 5 is an end point of BIER forwarding. Therefore, the site device 5 decapsulates the BIERv6 header in the multicast packet 5, to obtain the multicast data. Finally, the site device 5 sends the multicast data to the receiving device 1 based on an indication in the multicast data.

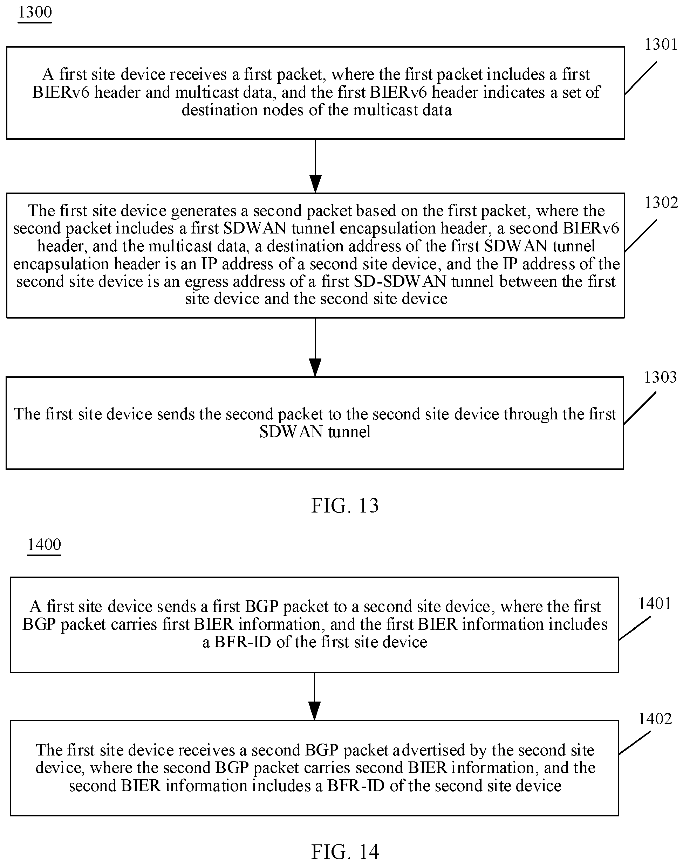

FIG. 13 is a schematic flowchart of a multicast communication method 1300 according to an embodiment of this application. As shown in FIG. 13, the multicast communication method 1300 includes the following step 1301 to step 1303.

Step 1301. A first site device receives a first packet, where the first packet includes a first BIERv6 header and multicast data, and the first BIERv6 header indicates a set of destination nodes of the multicast data.

In this embodiment, the multicast communication method 1300 is used to implement the method 800 and the method 1200 described in the foregoing embodiments. When the multicast communication method 1300 is used to implement the foregoing method 800, the first site device may be the site device 3 in the foregoing method 800, and the first packet may be the multicast packet 1 in the foregoing method 800.

Optionally, the first site device is a CPE or a POP site device.

Step 1302. The first site device generates a second packet based on the first packet, where the second packet includes a first SD-WAN tunnel encapsulation header, a second BIERv6 header, and the multicast data, a destination address of the first SD-WAN tunnel encapsulation header is an IP address of a second site device, the IP address of the second site device is an egress address of a first SD-WAN tunnel between the first site device and the second site device, and the second BIERv6 header indicates the set of destination nodes of the multicast data.

Correspondingly, the second packet may be the multicast packet 2 in the method 800, and the second site device may be the site device 5 in the method 800.

Step 1303. The first site device sends the second packet to the second site device through the first SD-WAN tunnel.

Correspondingly, the first SD-WAN tunnel may be the SD-WAN tunnel 2 between the site device 3 and the site device 5 in the foregoing method 800.

The first site device may determine, based on the IPv6 address of the target site device, to send the second packet to the target site device through the first SD-WAN tunnel. For example, the first site device queries a forwarding table based on the IPv6 address of the target site device, and determines that a next-hop outbound interface points to the first SD-WAN tunnel. Therefore, the first site device determines to send the second packet to the second site device through the first SD-WAN tunnel.

In a possible implementation, the first site device does not have a BIER capability. Therefore, the first site device does not process the first BIERv6 in the first packet. The first BIERv6 header is the same as the second BIERv6 header, a destination address of the first BIERv6 header is an IPv6 address of the target site device, and the target site device belongs to a destination node of the multicast data indicated by the first BIERv6 header There is a mapping relationship between the IPv6 address of the target site device and the IP address of the second site device. The first site device may find, based on the IPv6 address of the target site device, the IP address of the second site device used as the egress address of the SD-WAN tunnel. The target site device and the second site device may be different site devices. The destination site device is a site device that has a BIER capability, and the second site device is a site device that does not have the BIER capability. Alternatively, the target site device and the second site may be a same site device that has the BIER capability.

In this solution, for the site device that does not have the BIER capability, a destination address in the BIERv6 header may be used to indicate the site device to forward a multicast packet, and the site device does not need to sense a multicast service. In this way, the site device has a small quantity of multicast entries and the multicast entries are converged quickly, ensuring normal running of the multicast service.

Optionally, the method 1300 further includes the following steps. The first site device generates a third packet based on the first packet, where the third packet includes a second SD-WAN tunnel encapsulation header, a third BIERv6 header, and the multicast data, a destination address of the second SD-WAN tunnel encapsulation header is an IP address of a third site device, the IP address of the third site device is an egress address of a second SD-WAN tunnel between the first site device and the third site device, and the third BIERv6 header indicates the set of destination nodes of the multicast data; and the first site device sends the third packet to the third site device through the second SD-WAN tunnel.

For example, when the multicast communication method 1300 is used to implement the method 800, the third site device may be the site device 6 in the foregoing method 800, and the third packet may be the multicast packet 3 in the foregoing method 800.

Optionally, in a process in which the first site device generates the second packet based on the first packet, the first site device determines, based on the SID of the target site device and the forwarding table, that a next-hop outbound interface is the first SD-WAN tunnel; and the first site device generates the second packet based on the first packet and an egress address of the first SD-WAN tunnel.

When the site device does not have the BIER capability, the site device may determine, based on the destination address of the BIERv6 header, an SD-WAN tunnel for forwarding a multicast packet. In this way, a network device between the site device that does not have the BIER capability and another site device does not need to sense the multicast service. This reduces deployment complexity of the multicast service.

For example, when the method 1300 is used to implement the foregoing method 1200, the first site device may be a site device 3 that does not have a BIER capability in the method 1200, the first packet is the multicast packet 4 in the method 1200, and the second packet is the multicast packet 5 in the method 1200.

In another possible implementation, a destination address of the first BIERv6 header is an IPv6 address of the first site device, and a destination address of the second BIERv6 header is an IPv6 address of a target site device. The target site device belongs to a destination node of the multicast data indicated by the first BIERv6 header, and there is a mapping relationship between the IPv6 address of the target site device and the IP address of the second site device.

Optionally, the first site device may determine the IPv6 address of the target site device and a next-hop site based on the bit string in the first BIERv6 header and a BIER forwarding table, where the next-hop site is a first site, and the target site device is located at the first site. Then, the first site device determines, based on the first site, to send the second packet to the second site device through the first SD-WAN tunnel. For example, a mapping relationship between the next-hop site and the SD-WAN tunnel is established in the first site device. When the next-hop site is the first site, the first site device may determine, based on the mapping relationship, that an outbound interface points to the first SD-WAN tunnel.

In the solution, in a case that the site device has the BIER capability, the site device determines the next-hop site based on the BIER forwarding table, and then determines, based on the mapping relationship between the next-hop site and the SD-WAN tunnel, the SD-WAN tunnel for forwarding a multicast packet. In this way, the SD-WAN tunnel and BIER multicast are coupled, ensuring that an intermediate node does not need to sense the multicast service and reducing deployment complexity of the multicast service.

Optionally, the IPv6 address of the target site device identifies a site at which the target site device is located, and the site at which the target site device is located includes a plurality of site devices. In this case, in a process in which the first site device determines, based on the IPv6 address of the target site device and the mapping relationship, the SD-WAN tunnel for forwarding the second packet, one or more SD-WAN tunnels connected to different site devices in the target site may be determined, so that one of the SD-WAN tunnels may be selected based on a preset policy to forward a packet.

In the solution, a site identifier of a site at which the site device is located is used as a destination address in a BIERv6 header, so that it may be ensured that a multicast packet passes through any site device in the site. This facilitates load balancing and active/standby switchover between the site devices in the site, and improves network running flexibility.

Optionally, the method 1300 further includes the following steps. The first site device sends first BIER information to the target site device, where the first BIER information includes at least one of the following information: the IPv6 address of the first site device, a BIER bit forwarding router identity BFR-ID of the first site device, and a BIER bit forwarding router-prefix BFR-prefix of the first site device; and the first site device receives second BIER information advertised by the target site device, where the second BIER information includes one or more of the following information: an SID of the target site device, a BFR-ID of the target site device, and a BFR-prefix of the target site device.

For example, the first site device may be the site device 3 in the embodiment corresponding to FIG. 6, the third site device may be the site device 1 in the embodiment corresponding to FIG. 6, and the target site device may be the site device 5 in the embodiment corresponding to FIG. 6. In the embodiment corresponding to FIG. 6, the site device 3 may generate a BIER forwarding table based on BIER information advertised by another site device. Therefore, in this embodiment, the first site device may generate the BIER forwarding table based on the second BIER information advertised by the target site device, to guide the first site device to subsequently forward the second packet whose destination node is the target site device.

Optionally, the first BIER information or the second BIER information is carried in a BGP packet. The BGP packet includes a BGP SPF address family packet, a BGP LS address family packet, or a BGP SD-WAN address family packet.

Optionally, the first BIER information or the second BIER information is carried in a prefix network layer reachability information Prefix NLRI field in the BGP SPF address family packet or the BGP LS address family packet.

Specifically, for a manner of carrying the first BIER information and the second BIER information, refer to the descriptions in the embodiments corresponding to FIG. 6 and FIG. 7. Details are not described herein again.

FIG. 14 is a schematic flowchart of a multicast communication method 1400 according to an embodiment of this application. As shown in FIG. 14, the multicast communication method 1400 provided in embodiments of this application includes the following step 1401 and step 1402.

Step 1401. A first site device sends a first BGP packet to a second site device, where the first BGP packet carries first BIER information, and the first BIER information includes a BIER bit forwarding router identity BFR-ID of the first site device.

Step 1402. The first site device receives a second BGP packet advertised by the second site device, where the second BGP packet carries second BIER information, and the second BIER information includes a BFR-ID of the second site device.

In this embodiment, the multicast communication method 1400 is used to implement the foregoing embodiment corresponding to FIG. 6. When the multicast communication method 1400 is used to implement the embodiment corresponding to FIG. 6, the first site device may be a site device 3, and the second site device may be a site device 1 or a site device 5.

Optionally, the first site device generates a first BIER forwarding entry based on the second BGP packet, where the first BIER forwarding entry is used to record a mapping relationship between a BIER forwarding destination device and a next-hop site, the destination device is represented through the BFR-ID of the second site device, and the next-hop site is obtained through calculation by using the second site device as a destination address and based on a topology of an SD-WAN. For a site device in the SD-WAN, each site device advertises, to another site device, SD-WAN tunnel information established between the site device and the another site device. Therefore, after the first site device receives the SD-WAN tunnel information advertised by each another site device, the first site device may obtain a tunnel connection relationship between the site devices in the SD-WAN, to be specific, obtain the topology of the entire SD-WAN. In this way, when using the second site device as a destination address, the first site device may obtain, a next-hop site destined for the second site device through calculation based on the topology of the SD-WAN.

Optionally, the second BIER information further includes an IPv6 address of the second site device. The first BIER forwarding entry is used to record a mapping relationship between a BIER forwarding destination device, an IPv6 address of the destination device, and a next-hop site.

Specifically, the first site device may be the site device 3 in the embodiment corresponding to FIG. 6. For a process in which the first site device generates the BIER forwarding entry based on the second BGP packet, refer to a process in which the site device 3 generates the BIER forwarding entry in the embodiment corresponding to FIG. 6. Details are not described herein again.

Optionally, the second site device generates a second BIER forwarding entry based on the first BGP packet, where the second BIER forwarding entry records a mapping relationship between the BFR-ID of the first site device and a next-hop site, and the BFR-ID in the second BIER forwarding entry indicates a BIER forwarding destination device.

Specifically, the first site device may be the site device 3 in the embodiment corresponding to FIG. 5, and the second site device may be the site device 5 in the embodiment corresponding to FIG. 5. For a process in which the first site device establishes the SD-WAN tunnel and stores the mapping relationship between the next-hop site and the SD-WAN tunnel, refer to a process in which the site device 3 generates the forwarding table in the embodiment corresponding to FIG. 5. Details are not described herein again.

Optionally, the first site device determines, based on a topology of the SD-WAN, the next-hop site destined for the second site device. The topology of the SD-WAN is used to describe a connection relationship of the SD-WAN tunnel established between site devices in the SD-WAN. The first site device may obtain, through calculation in the topology of the SD-WAN through a shortest path algorithm, the next-hop site destined for the second site device.

Optionally, the method further includes: The first site device receives the first SD-WAN tunnel information advertised by a third site device, where the first SD-WAN tunnel information includes an IP address of the third site device and a site to which the third site device belongs; the first site device establishes the first SD-WAN tunnel between the first site device and the third site device based on the first SD-WAN tunnel information, and stores a first mapping relationship between a next-hop site and the first SD-WAN tunnel, where the next-hop site is the site to which the third site device belongs. That is, when the first site device establishes the first SD-WAN tunnel with the third site device, and when the next-hop site of the first site device is the third site device, an outbound interface of the first site device may be the first SD-WAN tunnel that points between the first site device and the third site device. To be specific, a packet may be forwarded to a corresponding next-hop site through the first SD-WAN tunnel.

Optionally, the third site device receives second SD-WAN tunnel information advertised by the second site device, where the second SD-WAN tunnel information includes an IP address of the second site device and information about a site to which the second site device belongs; and the third site device establishes the second SD-WAN tunnel between the third site device and the second site device based on the second SD-WAN tunnel information, and stores a second mapping relationship between a next-hop site and the second SD-WAN tunnel, where the next-hop site in the second mapping relationship is the site to which the second site device belongs.

In other words, the second SD-WAN tunnel is further established between the third site device and the second site device. The third site device may establish the second mapping relationship between the next-hop site and the second SD-WAN tunnel, so that when the next-hop site of the packet is the second site device, the packet is sent through the second SD-WAN tunnel.

Specifically, the first site device may be the site device 1 in the embodiment corresponding to FIG. 5, the third site device may be the site device 3 in the embodiment corresponding to FIG. 5, and the second site device may be the site device 5 in the embodiment corresponding to FIG. 5. For a process in which the first site device, the second site device, and the third site device establish the SD-WAN tunnel and store the mapping relationship between the next-hop site and the SD-WAN tunnel, refer to a process in which the site device generates the forwarding table in the embodiment corresponding to FIG. 5. Details are not described herein again.

Optionally, the method further includes: The first site device receives a first BIER packet, where the first BIER packet includes a first BIERv6 header and multicast data, and the first BIERv6 header indicates a set of destination nodes of the multicast data; and the first site device determines, based on the first BIERv6 header, the first BIER forwarding entry, and the first mapping relationship, to forward the multicast data through the first SD-WAN tunnel.

Optionally, the method further includes: The first site device receives third SD-WAN tunnel information advertised by the second site device, where the third SD-WAN tunnel information includes an IP address of the second site device and information about a site to which the second site device belongs; and the first site device establishes a third SD-WAN tunnel between the first site device and the second site device based on the third SD-WAN tunnel information, and stores a third mapping relationship between a next-hop site and the third SD-WAN tunnel, where the next-hop site in the third mapping relationship is the site to which the second site device belongs.

Optionally, the method further includes: The first site device receives a first BIER packet, where the first BIER packet includes a first BIERv6 header and multicast data, and the first BIERv6 header indicates a set of destination nodes of the multicast data; and the first site device determines, based on the first BIERv6 header, the first BIER forwarding entry, and the third mapping relationship, to forward the multicast data through the third SD-WAN tunnel.

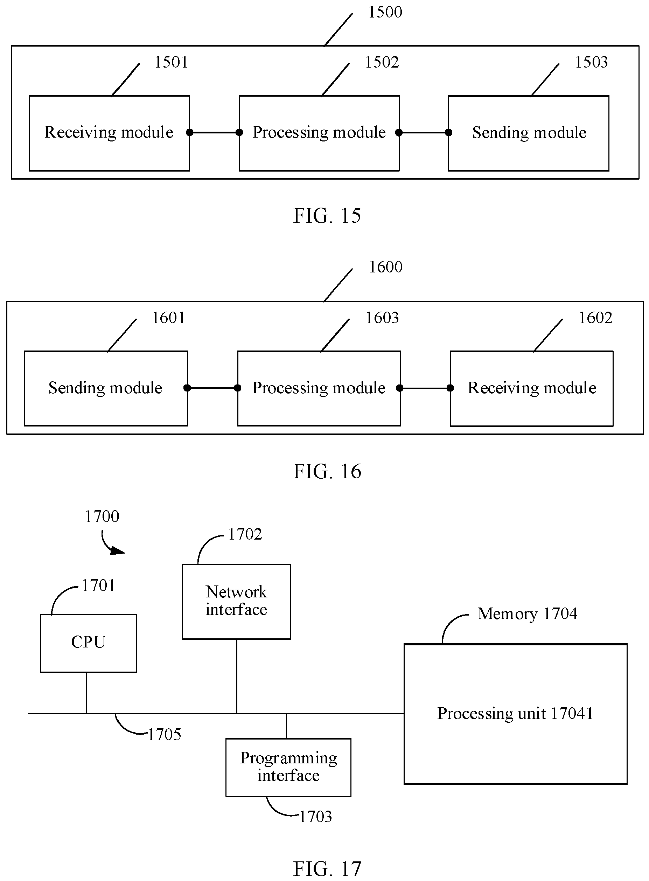

To implement the foregoing embodiments, this application further provides a communication apparatus. FIG. 15 is a schematic diagram of a structure of a communication apparatus 1500 according to an embodiment of this application. The communication apparatus 1500 shown in FIG. 15 is, for example, the site device 3 in the method 800 or the method 1200, or the first site device in the method 1300 in the embodiment corresponding to FIG. 5 or FIG. 6.

As shown in FIG. 15, the communication apparatus 1500 belongs to a first site device in an SD-WAN, and the communication apparatus 1500 includes: a receiving module 1501, configured to receive a first packet, where the first packet includes a first bit index explicit replication IPv6 encapsulation BIERv6 header and multicast data, and the first BIERv6 header indicates a set of destination nodes of the multicast data; a processing module 1502, configured to generate a second packet based on the first packet, where the second packet includes a first SD-WAN tunnel encapsulation header, a second BIERv6 header, and the multicast data, a destination address of the first SD-WAN tunnel encapsulation header is an IP address of a second site device, the IP address of the second site device is an egress address of a first SD-WAN tunnel between the first site device and the second site device, and the second BIERv6 header indicates the set of destination nodes of the multicast data; and a sending module 1503, configured to send the second packet to the second site device through the first SD-WAN tunnel.

In a possible implementation, the first BIERv6 header is the same as the second BIERv6 header, and a destination address of the first BIERv6 header is an IPv6 address of a target site device. The processing module 1502 is further configured to determine, based on the IPv6 address of the target site device, to send the second packet to the target site device through the first SD-WAN tunnel.

In a possible implementation, the processing module 1502 is further configured to query a forwarding table based on the IPv6 address of the target site device, and determine that a next-hop outbound interface points to the first SD-WAN tunnel.

In a possible implementation, a destination address of the first BIERv6 header is an IPv6 address of the first site device, and a destination address of the second BIERv6 header is the IPv6 address of the target site device.

In a possible implementation, the processing module 1502 is further configured to determine the IPv6 address of the target site device and a next-hop site based on a bit string in the first BIERv6 header and a BIER forwarding table, where the next-hop site is a first site, and the target site device is located at the first site; and determine, based on the first site, to send the second packet to the second site device through the first SD-WAN tunnel.

In a possible implementation, the IPv6 address of the target site device identifies a site at which the target site device is located, and the site at which the target site device is located includes a plurality of site devices.

In a possible implementation, the IPv6 address of the target site device is a segment identifier SID of an End.BIER type.

In a possible implementation, the sending module 1503 is further configured to send first BIER information to the target site device, where the first BIER information includes at least one of the following information: the IPv6 address of the first site device, a BFR-ID of the first site device, and a BFR-prefix of the first site device; and the receiving module 1501 is further configured to receive second BIER information advertised by the target site device, where the second BIER information includes one or more of the following information: the IPv6 address of the target site device, a BFR-ID of the target site device, and a BFR-prefix of the target site device.

In a possible implementation, the first BIER information or the second BIER information is carried in a BGP packet.

In a possible implementation, the BGP packet includes a BGP shortest path first SPF address family packet, a BGP link state LS address family packet, or a BGP SD-WAN address family packet.

In a possible implementation, the first BIER information or the second BIER information is carried in a prefix network layer reachability information Prefix NLRI field in the BGP SPF address family packet or the BGP LS address family packet.

In a possible implementation, the processing module 1502 is further configured to generate a third packet based on the first packet, where the third packet includes a second SD-WAN tunnel encapsulation header, a third BIERv6 header, and the multicast data, a destination address of the second SD-WAN tunnel encapsulation header is an IP address of a third site device, the IP address of the third site device is an egress address of a second SD-WAN tunnel between the first site device and the third site device, and the third BIERv6 header indicates a set of destination nodes of the multicast data; and the sending module 1503 is further configured to send the third packet to the third site device through the second SD-WAN tunnel.

In a possible implementation, the communication apparatus 1500 belongs to a CPE or a network POP site device.

In another possible embodiment, the communication apparatus 1500 may belong to a second site device in an SD-WAN. In the communication apparatus 1500, the receiving module 1501 is configured to receive, through a first SD-WAN tunnel, a first packet sent by a first site device, where the first packet includes a first SD-WAN tunnel encapsulation header, a first BIERv6 header, and multicast data, a destination address of the first SD-WAN tunnel encapsulation header is an IP address of the second site device, the IP address of the second site device is an egress address of the first SD-WAN tunnel between the first site device and the second site device, and the second BIERv6 header indicates the set of destination nodes of the multicast data; the processing module 1502 is configured to generate a second packet based on the first packet, where the second packet includes the multicast data; and the sending module 1503 is configured to forward the second packet.

In a possible implementation, the second packet includes a second SD-WAN tunnel encapsulation header, a second BIERv6 header, and the multicast data, a destination address of the second SD-WAN tunnel encapsulation header is an IP address of the third site device, the IP address of the third site device is an egress address of a second SD-WAN tunnel between the second site device and the third site device, and the second BIERv6 header indicates the set of destination nodes of the multicast data; and the sending module 1503 is configured to send the second packet to the third site device through the second SD-WAN tunnel.

In a possible implementation, the first BIERv6 header is the same as the second BIERv6 header, and a destination address of the first BIERv6 header is an IPv6 address of a target site device. The processing module 1502 is configured to determine to send the second packet to the target site device through the second SD-WAN tunnel.

In a possible implementation, a destination address of the first BIERv6 header is an IPv6 address of the second site device, and a destination address of the second BIERv6 header is an IPv6 address of a target site device.

FIG. 16 is a schematic diagram of a structure of a communication apparatus 1600 according to an embodiment of this application. The communication apparatus 1600 shown in FIG. 16 is, for example, the site device 3 in the embodiment corresponding to FIG. 5 or FIG. 6, or the first site device in the method 1400.

As shown in FIG. 16, the communication apparatus 1600 is a first site device in an SD-WAN, and includes:
a sending module 1601, configured to send a first BGP packet to a second site device, where the first BGP packet carries first BIER information, and the first BIER information includes a BIER bit forwarding router identity BFR-ID of the first site device; a receiving module 1602, configured to receive a second BGP packet advertised by a second site device, where the second BGP packet carries second BIER information, and the second BIER information includes a BFR-ID of the second site device; and a processing module 1603, configured to generate a first BIER forwarding entry based on the second BGP packet, where the first BIER forwarding entry records a mapping relationship between the BFR-ID of the second site device and a next-hop site, and a BFR-ID in the first BIER forwarding entry indicates a BIER forwarding destination device.

In a possible implementation, the processing module 1603 is configured to determine, based on a topology of the SD-WAN, the next-hop site destined for the second site device.

In a possible implementation, the receiving module 1602 is further configured to receive first SD-WAN tunnel information advertised by a third site device, where the first SD-WAN tunnel information includes an IP address of the third site device and a site to which the third site device belongs; and the processing module 1603 is configured to establish a first SD-WAN tunnel between the first site device and the third site device based on the first SD-WAN tunnel information, and store a mapping relationship between a next-hop site and the first SD-WAN tunnel, where the next-hop site is the site to which the third site device belongs.

In a possible implementation, the receiving module 1602 is configured to receive third SD-WAN tunnel information advertised by the second site device, where the third SD-WAN tunnel information includes an IP address of the second site device and information about a site to which the second site device belongs; and the processing module 1603 is configured to establish a third SD-WAN tunnel between the first site device and the second site device based on the third SD-WAN tunnel information, and store a third mapping relationship between a next-hop site and the third SD-WAN tunnel, where the next-hop site in the third mapping relationship is the site to which the second site device belongs.

In a possible implementation, the receiving module 1602 is configured to receive a first BIER packet, where the first BIER packet includes a first BIERv6 header and multicast data, and the first BIERv6 header indicates a set of destination nodes of the multicast data; and the processing module 1603 is configured to determine, based on the first BIERv6 header, the first BIER forwarding entry, and the first mapping relationship, to forward the multicast data through the first SD-WAN tunnel.

The communication apparatus shown in FIG. 15 and FIG. 16 may be a processor or a chip system in a site device, and is configured to perform the receiving operation, the processing operation, and the sending operation. The communication apparatus shown in FIG. 15 and FIG. 16 may also be a site device. For example, the communication apparatus is specifically a network device such as a switch, a gateway, a router, or a hub. A specific form of the communication apparatus is not limited in embodiments of this application.

FIG. 17 is a schematic diagram of a structure of a communication apparatus 1700 according to an embodiment of this application. The communication apparatus 1700 shown in FIG. 17 may be configured to perform the steps performed by the first site device in the foregoing embodiments. Although the communication apparatus 1700 shown in FIG. 17 shows some specific features, a person skilled in the art may be aware from embodiments of this application that, for brevity, FIG. 17 does not show various other features, to avoid confusing more related aspects of implementations disclosed in embodiments of this application. Therefore, as an example, in some implementations, the communication apparatus 1700 includes one or more processors (for example, a CPU) 1701, a network interface 1702, a programming interface 1703, a memory 1704, and one or more communication buses 1705 that are configured to interconnect various components. In some other implementations, some functional components or units may be omitted or added to the communication apparatus 1700 based on the foregoing example.

In some implementations, the network interface 1702 is configured to connect to one or more other communication apparatuses/servers in a network system. In some implementations, the communication bus 1705 includes a circuit that interconnects and controls communication between system components. The memory 1704 may include a non-volatile memory, for example, a read-only memory (read-only memory, ROM), a programmable ROM (programmable ROM, PROM), an erasable PROM (erasable PROM, EPROM), an electrically EPROM (electrically EPROM, EEPROM), or a flash memory. The memory 1704 may also include a volatile memory. The volatile memory may be a random access memory (random access memory, RAM), and is used as an external cache.

In some implementations, a non-transitory computer-readable storage medium of the memory 1704 stores the following programs, modules, and data structures, or a subset thereof, and for example, includes an obtaining unit (not shown in the figure), a sending unit (not shown in the figure), and a processing unit 17041.

In a possible embodiment, the communication apparatus 1700 may have any function of the communication apparatus in the method embodiments corresponding to FIG. 12 to FIG. 14.

It should be understood that the communication apparatus 1700 corresponds to the first communication apparatus in the foregoing method embodiment, and the modules in the communication apparatus 1700 and the foregoing other operations and/or functions are separately used to implement various steps and methods implemented by the first communication apparatus in the foregoing method embodiment. For specific details, refer to the foregoing method embodiments corresponding to FIG. 12 to FIG. 14. For brevity, details are not described herein again.

It should be understood that in this application, the network interface 1702 on the communication apparatus 1700 may complete a data receiving and sending operation, or the processor may invoke program code in the memory, and implement a function of the transceiver unit in cooperation with the network interface 1702 when required.

In various implementations, the communication apparatus 1700 is configured to perform the multicast communication method provided in embodiments of this application, for example, perform the multicast communication method corresponding to the embodiments shown in FIG. 12 to FIG. 14.

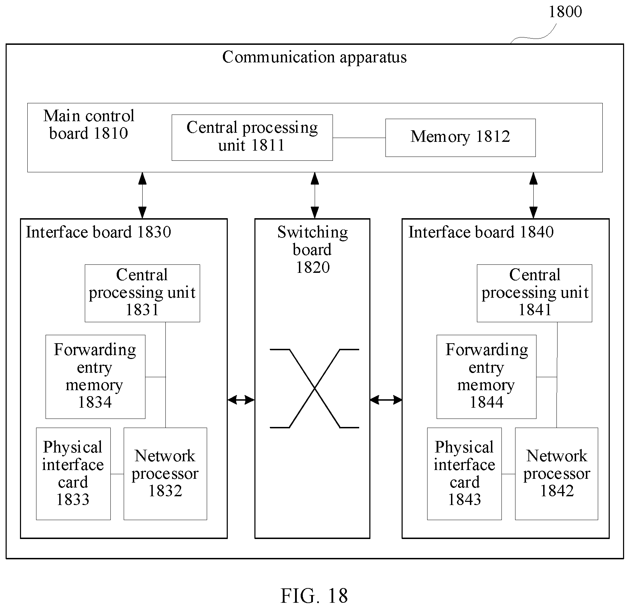

A specific structure of the communication apparatus in FIG. 17 in this application may be shown in FIG. 18.

FIG. 18 is a schematic diagram of a structure of a communication apparatus 1800 according to an embodiment of this application. The communication apparatus 1800 shown in FIG. 18 may be configured to perform steps performed by any of the first site device, the second site device, a device at a sending side, or a device at a receiving side in the foregoing embodiments. The communication apparatus 1800 includes a main control board 1810 and an interface board 1830.

The main control board 1810 is also referred to as a main processing unit (main processing unit, MPU) or a route processor (route processor). The main control board 1810 is configured to control and manage components in the communication apparatus 1800, including functions such as route computation, device management, device maintenance, and protocol processing. The main control board 1810 includes a central processing unit 1811 and a memory 1812.

The interface board 1830 is also referred to as a line processing unit (line processing unit, LPU), a line card (line card), or a service board. The interface board 1830 is configured to provide various service interfaces, and forward a data packet. Service interfaces include but are not limited to Ethernet interfaces and Packet over SONET/SDH (POS) interfaces. The interface board 1830 includes a central processing unit 1831, a network processor 1832, a physical interface card (physical interface card, PIC) 1833, and a forwarding entry memory 1834.

The central processing unit 1831 on the interface board 1830 is configured to control and manage the interface board 1830, and communicate with the central processing unit 1811 on the main control board 1810.

The network processor 1832 is configured to implement packet forwarding processing. A form of the network processor 1832 may be a forwarding chip.

The physical interface card 1833 is configured to implement an interconnection function at a physical layer. Original traffic enters the interface board 1830 from the physical interface card 1833, and a processed packet is sent from the physical interface card 1833. The physical interface card 1833 includes at least one physical interface. The physical interface is also referred to as a physical port, and the physical interface may be a flexible Ethernet (Flexible Ethernet, FlexE) physical interface. In some embodiments, the central processing unit 1831 of the interface board 1830 may also perform a function of the network processor 1832, for example, implement software forwarding based on a general-purpose CPU. In this way, the interface board 1830 does not need the network processor 1832.

Optionally, the communication apparatus 1800 includes a plurality of interface boards. For example, the communication apparatus 1800 further includes an interface board 1840. The interface board 1840 includes a central processing unit 1841, a network processor 1842, a physical interface card 1843, and a forwarding entry memory 1844.

Optionally, the communication apparatus 1800 further includes a switching board 1820. The switching board 1820 may also be referred to as a switch fabric unit (switch fabric unit, SFU). When the communication apparatus has a plurality of interface boards 1830, the switching board 1820 is configured to exchange data between the interface boards. For example, the interface board 1830 and the interface board 1840 may communicate with each other through the switching board 1820.

The main control board 1810 is coupled to the interface board. For example, the main control board 1810, the interface board 1830 and the interface board 1840, and the switching board 1820 are connected through a system bus and/or a system backplane to implement interworking. In a possible implementation, an inter-process communication protocol (inter-process communication, IPC) channel is established between the main control board 1810 and the interface board 1830, and the main control board 1810 and the interface board 1830 communicate with each other through the IPC channel.

Logically, the communication apparatus 1800 includes a control plane and a forwarding plane. The control plane includes the main control board 1810 and the central processing unit 1831. The forwarding plane includes components that perform forwarding, for example, a forwarding entry memory 1834, a physical interface card 1833, and a network processor 1832. The control plane performs functions such as announcing a route, generating a forwarding table, processing signaling and a protocol packet, and configuring and maintaining a status of a device. The control plane delivers the generated forwarding table to the forwarding plane. On the forwarding plane, the network processor 1832 searches the forwarding table delivered by the control plane to forward a packet received by the physical interface card 1833. The forwarding table delivered by the control plane may be stored in the forwarding entry memory 1834. In some embodiments, the control plane and the forwarding plane may be completely separated, and are not on a same device.

It should be understood that in embodiments of this application, an operation on the interface board 1840 is the same as an operation on the interface board 1830. For brevity, details are not described again. It should be understood that the communication apparatus 1800 in this embodiment may correspond to the first communication apparatus in the foregoing method embodiments, and the main control board 1810, the interface board 1830, and/or the interface board 1840 in the communication apparatus 1800 may implement functions and/or various steps implemented by the first communication apparatus in the foregoing method embodiments. For brevity, details are not described herein again.

It should be noted that, there may be one or more main control boards. When there are a plurality of main control boards, the main control boards may include an active main control board and a standby main control board. There may be one or more interface boards, and the communication apparatus with a stronger data processing capability provides more interface boards. There may also be one or more physical interface cards on the interface board. There may be no switching board or one or more switching boards. When there are a plurality of switching boards, load balancing and redundancy backup may be implemented together. In a central forwarding architecture, the communication apparatus may not need a switching board, and the interface board provides a function of processing service data of an entire system. In a distributed forwarding architecture, the communication apparatus may have at least one switching board, and exchange data between a plurality of interface boards through the switching board, to provide a large-capacity data exchange and processing capability. Optionally, a form of the communication apparatus may also be that there is only one card, that is, there is no switching board, and functions of the interface board and the main control board are integrated on the one card. In this case, a central processing unit on the interface board and a central processing unit on the main control board may be combined into one central processing unit on the one card, to perform a function obtained after the two are superimposed. Which architecture is specifically used depends on a specific networking deployment scenario, and is not uniquely limited herein.

It should be understood that the communication apparatus in the foregoing product forms separately has any function of the first site device in the foregoing method embodiments. Details are not described herein again.

Further, embodiments of this application further provide a computer program product. When the computer program product is run on a communication apparatus, the communication apparatus is enabled to perform the method performed by any communication apparatus in the method embodiments corresponding to FIG. 12 to FIG. 14.

Embodiments of this application further provide a chip system, including a processor and an interface circuit. The interface circuit is configured to receive instructions and transmit the instructions to the processor. The processor is configured to implement the method in any of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

## Claims

1. A multicast communication method, wherein the method comprises:
receiving, by a first site device, a first packet, wherein the first packet comprises a first bit index explicit replication IPv6 encapsulation BIERv6 header and multicast data, and the first BIERv6 header indicates a set of destination nodes of the multicast data;
generating, by the first site device, a second packet based on the first packet, wherein the second packet comprises a first software-defined wide area network SD-WAN tunnel encapsulation header, a second BIERv6 header, and the multicast data, a destination address of the first SD-WAN tunnel encapsulation header is an IP address of a second site device, the IP address of the second site device is an egress address of a first SD-WAN tunnel between the first site device and the second site device, and the second BIERv6 header indicates the set of destination nodes of the multicast data; and
sending, by the first site device, the second packet to the second site device through the first SD-WAN tunnel.

2. The method according to claim 1, wherein the first BIERv6 header is the same as the second BIERv6 header, a destination address of the first BIERv6 header is an IPv6 address of a target site device, and the method further comprises:
determining, by the first site device based on the IPv6 address of the target site device, to send the second packet to the target site device through the first SD-WAN tunnel.

3. The method according to claim 2, wherein the determining, based on the IPv6 address of the target site device, to send the second packet to the target site device through the first SD-WAN tunnel comprises:
querying, by the first site device, a forwarding table based on the IPv6 address of the target site device, and determining that a next-hop outbound interface points to the first SD-WAN tunnel.

4. The method according to claim 1, wherein a destination address of the first BIERv6 header is an IPv6 address of the first site device, and a destination address of the second BIERv6 header is an IPv6 address of a target site device.

5. The method according to claim 4, wherein the method further comprises:
determining, by the first site device, the IPv6 address of the target site device and a next-hop site based on a bit string in the first BIERv6 header and a BIER forwarding table, wherein the next-hop site is a first site, and the target site device is located at the first site; and
determining, by the first site device based on the first site, to send the second packet to the second site device through the first SD-WAN tunnel.

6. The method according to any one of claims 2 to 5, wherein the IPv6 address of the target site device is a segment identifier SID of an End.BIER type.

7. The method according to claim 4 or 5, wherein before the receiving, by a first site device, a first packet, the method further comprises:
sending, by the first site device, first BIER information to the target site device, wherein the first BIER information comprises at least one of the following information: the IPv6 address of the first site device, a BIER bit forwarding router identity BFR-ID of the first site device, and a BIER bit forwarding router prefix BFR-prefix of the first site device; and
receiving, by the first site device, second BIER information advertised by the target site device, wherein the second BIER information comprises one or more of the following information: the IPv6 address of the target site device, a BFR-ID of the target site device, and a BFR-prefix of the target site device.

8. The method according to claim 7, wherein the first BIER information or the second BIER information is carried in a border gateway protocol BGP packet.

9. The method according to any one of claims 1 to 8, wherein the method further comprises:
generating, by the first site device, a third packet based on the first packet, wherein the third packet comprises a second SD-WAN tunnel encapsulation header, a third BIERv6 header, and the multicast data, a destination address of the second SD-WAN tunnel encapsulation header is an IP address of a third site device, the IP address of the third site device is an egress address of a second SD-WAN tunnel between the first site device and the third site device, and the third BIERv6 header indicates the set of destination nodes of the multicast data; and
sending, by the first site device, the third packet to the third site device through the second SD-WAN tunnel.

10. A multicast communication method, comprising:
receiving, by a second site device through a first SD-WAN tunnel, a first packet sent by a first site device, wherein the first packet comprises a first SD-WAN tunnel encapsulation header, a first BIERv6 header, and multicast data, a destination address of the first SD-WAN tunnel encapsulation header is an IP address of the second site device, the IP address of the second site device is an egress address of the first SD-WAN tunnel between the first site device and the second site device, and the second BIERv6 header indicates a set of destination nodes of the multicast data;
generating, by the second site device, a second packet based on the first packet, wherein the second packet comprises the multicast data; and
forwarding, by the second site device, the second packet.

11. The method according to claim 10, wherein the second packet comprises a second SD-WAN tunnel encapsulation header, a second BIERv6 header, and the multicast data, a destination address of the second SD-WAN tunnel encapsulation header is an IP address of a third site device, the IP address of the third site device is an egress address of a second SD-WAN tunnel between the second site device and the third site device, and the second BIERv6 header indicates the set of destination nodes of the multicast data; and
the forwarding, by the second site device, the second packet comprises:
sending, by the second site device, the second packet to the third site device through the second SD-WAN tunnel.

12. The method according to claim 11, wherein the first BIERv6 header is the same as the second BIERv6 header, a destination address of the first BIERv6 header is an IPv6 address of a target site device, and the method further comprises:
determining, by the second site device based on the IPv6 address of the target site device, to send the second packet to the target site device through the second SD-WAN tunnel.

13. The method according to claim 11, wherein a destination address of the first BIERv6 header is an IPv6 address of the second site device, and a destination address of the second BIERv6 header is an IPv6 address of a target site device.

14. A communication apparatus, wherein
configured to perform the method according to any one of claims 1 to 9.

15. A communication apparatus, wherein
configured to perform the method according to any one of claims 10 to 13.
